# EUROPEAN PATENT SPECIFICATION

(11) **EP 2 779 530 B1**
(45) Date of publication and mention of the grant of the patent: **26.04.2017**
(21) Application number: 12879394.0
(22) Date of filing: 20.06.2012
(51) Int. Cl.: H04L 12/24, H04L 12/707, H04L 12/703, H04L 12/723, H04L 12/701

(54) **METHOD, SYSTEM, AND NODE DEVICE FOR ESTABLISHING RECOVERY PATH**
VERFAHREN, SYSTEM UND KNOTENVORRICHTUNG ZUM AUFBAUEN EINES WIEDERHERSTELLUNGSPFADES
PROCÉDÉ, SYSTÈME, ET DISPOSITIF DE NOEUD DESTINÉS À ÉTABLIR UN TRAJET DE RÉCUPÉRATION

(43) Date of publication of application: 17.09.2014
(73) Proprietor: Huawei Technologies Co., Ltd., Longgang District Shenzhen, Guangdong 518129 (CN)
(72) Inventor: SUI, Zhicheng, Shenzhen Guangdong 518129 (CN)
(74) Representative: Körber, Martin Hans
(86) International application number: PCT/CN2012/077206
(87) International publication number: WO 2013/189041

(56) References cited:
- EP-A1- 1 826 961
- WO-A1-03/071746
- WO-A1-2011/079967
- WO-A1-2011/079967
- CN-A- 101 030 939
- CN-A- 102 104 495
- CN-A- 102 201 985
- US-A1- 2002 172 149
- US-A1- 2008 062 882
- US-A1- 2012 147 741
- AYAN BANERJEE ET AL: "Generalized Multiprotocol Label Switching: An Overview of Signaling Enhancements and Recovery Techniques", IEEE COMMUNICATIONS MAGAZINE, IEEE SERVICE CENTER, PISCATAWAY, US, vol. 39, no. 7, 1 July 2001 (2001-07-01), pages 144-151, XP011091771, ISSN: 0163-6804
- LI (AT&T) C KALMANEK(AT&T) J YATES (AT&T) F LIAW (ZAFFIRE) V SHARMA (MATANOIA) G: "RSVP-TE Extensions For Shared-Mesh Restoration in Transport Networks; draft-li-shared-mesh-restoration-01.txt", 20011101, no. 1, 1 November 2001 (2001-11-01), XP015031744, ISSN: 0000-0004

## Description

### TECHNICAL FIELD

The present invention relates to network communications technologies, and in particular, to a method, a system, and a node device for establishing a restoration path.

### BACKGROUND

An automatically switched optical network (Automatically Switched Optical Network, ASON) can dynamically establish a path, and has a strong fault resistance capability. After a working path of a service encounters a fault, the service can be restored by using a restoration path, so as to ensure reliability of services with different survivability requirements.

In an existing automatically switched optical network technology, a restoration path can be dynamically established, and generally, the restoration path is established in two manners: A route is preset but no bandwidth resource is reserved, and this manner cannot ensure a bandwidth resource of the restoration path, the restoration path may preempt a resource of another service, and after a working path encounters a fault, a service cannot be restored in time and effectively, thereby reducing network reliability; a route is preset and a new bandwidth resource is reserved, and in this manner, requirements for a bandwidth resource increase, and a networking cost increases.

For example, XP 011091771 refers to an overview of signaling enhancements and recovery techniques.

Further, XP 015031744 refers to RSVP-TE extensions for shared-mesh restoration in transport networks.

Further, EP 1 826 961 A1 refers to a method for creating a path for a return label in a multi-protocol label switching system.

Further, US 2008/0062882 A1 refers to a method and system for a protecting label switched path.

In addition, WO 03/071746 A1 refers to a method for local protection of label-switching paths with resource sharing.

Further, US 2012/0147741 A1 refers to a method and system for Ethernet path protection switching.

In addition, WO 2011/079967 A1 refers to a shared path recovery scheme.

In addition, US 2002/0172149 A1 refers to a method and apparatus for a protection path setup.

### SUMMARY

Embodiments of the present invention provide a method, a system, and a node device for establishing a restoration path, so as to solve the problems in the prior art that a service cannot be restored in time and effectively, and requirements for a bandwidth resource increase.

The following technical solutions are adopted in the embodiments of the present invention:

One aspect of the present invention provides a method for establishing a restoration path, including:
obtaining, by a first node according to route information of a restoration path of a service and route information of a working path of the service, a working forward-shared node set of the restoration path, where a working forward-shared node in the working forward-shared node set has a same downstream neighboring node on the restoration path and the working path;
determining, by the first node according to the working forward-shared node set, whether the first node is a working forward-shared node, and obtaining a first determination result;
   allocating, by the first node, a first label and a first interface according to a condition, where the condition includes the first determination result, the first label is a forwarding label from the first node to a first downstream neighboring node, the first interface is an outbound interface from the first node to the first downstream neighboring node, and the first downstream neighboring node is a downstream neighboring node of the first node on the restoration path, wherein the allocating, by the first node, the first label and the first interface according to the condition, wherein the condition comprises the first determination result, specifically comprises:
      if the first determination result is that the first node is a working forward-shared node, allocating, by the first node, the first label to a forwarding label from the first node to a second downstream neighboring node and the first interface to an outbound interface from the first node to the second downstream neighboring node, the second downstream neighboring node is a downstream neighboring node of the first node on the working path; if the first determination result is that the first node is not a working forward-shared node, randomly allocating, by the first node, the first label and the first interface;
   sending, by the first node, an establishment request message to the first downstream neighboring node, where the establishment request message includes at least the first label, the first interface, the route information of the restoration path, and working forward-shared node information, and the working forward-shared node information is a node set obtained by removing the first node from the working forward-shared node set in case the first node is a working forward-shared node;
   receiving, by the first node, an establishment response message of the restoration path, where the establishment response message includes at least a fourth label, a fourth interface, and the route information of the restoration path, the fourth label is a forwarding label from the first downstream neighboring node to the first node, and the fourth interface is an outbound interface from the first downstream neighboring node to the first node; and
   establishing, by the first node, a cross-connection of the restoration path according to the first label, the first interface, the fourth label, and the fourth interface.

Yet another aspect of the present invention provides a node device configured to perform the above first mentioned aspect.

According to the method and node device for establishing a restoration path that are provided in the embodiments of the present invention, a node set that is on a restoration path and may share a bandwidth resource with a working path is obtained by using a source node and a sink node, information about the node set is transferred to another node on the restoration path by using signaling, and each node allocates a label and an outbound interface according to the information about the node set. Therefore, automatic establishment of the restoration path is implemented, a bandwidth resource of the restoration path is ensured, and a
service can be restored in time and effectively after the working path encounters a fault, thereby improving network reliability. In addition, by using the technical solutions provided in the embodiments of the present invention, a bandwidth resource on an existing working path can be further reused, which improves network resource utilization and reduces a networking cost.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1a is a flowchart of a method for establishing a restoration path according to an embodiment of the present invention;
FIG. 1b is a flowchart of a method for establishing a restoration path according to another embodiment of the present invention;
FIG. 1c is a flowchart of a method for establishing a restoration path according to yet another embodiment of the present invention;
FIG. 2 is a schematic diagram of a network topology according to an embodiment of the present invention;
FIG. 3 is a structural block diagram of a node device according to an embodiment of the present invention;
FIG. 4 is a structural block diagram of another node device according to an embodiment of the present invention;
FIG. 5 is a structural block diagram of yet another node device according to an embodiment of the present invention; and
FIG. 6 is a schematic diagram of a system for establishing a restoration path according to an embodiment of the present invention.

### DESCRIPTION OF EMBODIMENTS

Embodiments of the present invention provide a method, a system, and a node device for establishing a restoration path. For a better understanding of the technical solutions of the present invention, the following describes the embodiments of the present invention in detail with reference to the accompanying drawings.

It should be made clear that the described embodiments are merely a part rather than all of the embodiments of the present invention. All other embodiments obtained by a person of ordinary skill in the art based on the embodiments of the present invention without creative efforts shall fall within the protection scope of the present invention.

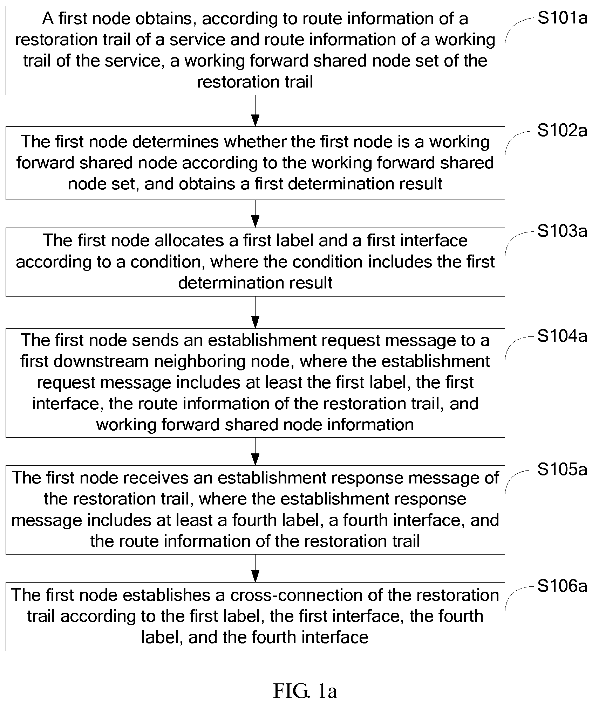

According to an embodiment of the present invention, a process of a method for establishing a restoration path is shown in FIG. 1a, and the method includes the following steps:
Step S101a: A first node obtains, according to route information of a restoration path of a service and route information of a working path of the service, a working forward-shared node set of the restoration path, where a working forward-shared node in the working forward-shared node set has a same downstream neighboring node on the restoration path and the working path.
Step S102a: The first node determines whether the first node is a working forward-shared node according to the working forward-shared node set, and obtains a first determination result.
Step S103a: The first node allocates a first label and a first interface according to a condition, where the condition includes the first determination result, the first label is a forwarding label from the first node to a first downstream neighboring node, the first interface is an outbound interface from the first node to the first downstream neighboring node, and the first downstream neighboring node is a downstream neighboring node of the first node on the restoration path.
Step S104a: The first node sends an establishment request message to the first downstream neighboring node, where the establishment request message includes at least the first label, the first interface, the route information of the restoration path, and working forward-shared node information, and the working forward-shared node information is a node set obtained by removing the first node from the working forward-shared node set.
Step S105a: The first node receives an establishment response message of the restoration path, where the establishment response message includes at least a fourth label, a fourth interface, and the route information of the restoration path, the fourth label is a forwarding label from the first downstream neighboring node to the first node, and the fourth interface is an outbound interface from the first downstream neighboring node to the first node.
Step S106a: The first node establishes a cross-connection of the restoration path according to the first label, the first interface, the fourth label, and the fourth interface.

Further, that the first node allocates a first label and a first interface according to a condition, where the condition includes the first determination result, may specifically include:
if the first determination result is that the first node is a working forward-shared node, the first node allocates the first label and the first interface, where the first label is the same as a forwarding label from the first node to a second downstream neighboring node, the first interface is the same as an outbound interface from the first node to the second downstream neighboring node, and the second downstream neighboring node is a downstream neighboring node of the first node on the working path.

Further, the establishment request message may further include shared resource indication information, where the shared resource indication information may be used to indicate that the restoration path shares a bandwidth resource with the working path.

Further, the route information of the restoration path is obtained by the first node by searching according to fault information of the working path.

The restoration path may further share a bandwidth resource with the working path and a protection path, and based on the foregoing step S101a to step S106a, the method may further include:
the first node obtains, according to the route information of the restoration path and route information of a protection path of the service, a protection forward-shared node set of the restoration path, where a protection forward-shared node in the protection forward-shared node set has a same downstream neighboring node on the restoration path and the protection path;
the first node determines whether the first node is a protection forward-shared node according to the protection forward-shared node set, and obtains a second determination result; and
the condition further includes the second determination result; and the establishment request message further includes protection forward-shared node information, where the protection forward-shared node information is a node set obtained by removing the first node from the protection forward-shared node set.

Further, that the first node allocates a first label and a first interface according to a condition, where the condition includes the first determination result and the second determination result, may specifically include:
if the first determination result is that the first node is a working forward-shared node, the first node allocates the first label and the first interface, where the first label is the same as a forwarding label from the first node to the second downstream neighboring node, the first interface is the same as an outbound interface from the first node to the second downstream neighboring node, and the second downstream neighboring node is a downstream neighboring node of the first node on the working path; and
if the second determination result is that the first node is a protection forward-shared node, the first node allocates the first label and the first interface, where the first label is the same as a forwarding label from the first node to a third downstream neighboring node, the first interface is the same as an outbound interface from the first node to the third downstream neighboring node, and the third downstream neighboring node is a downstream neighboring node of the first node on the protection path.

Further, the establishment request message may further include shared resource indication information, where the shared resource indication information may be used to indicate that the restoration path shares a bandwidth resource with the working path and the protection path.

Further, the route information of the restoration path is obtained by the first node by searching according to fault information of the working path.

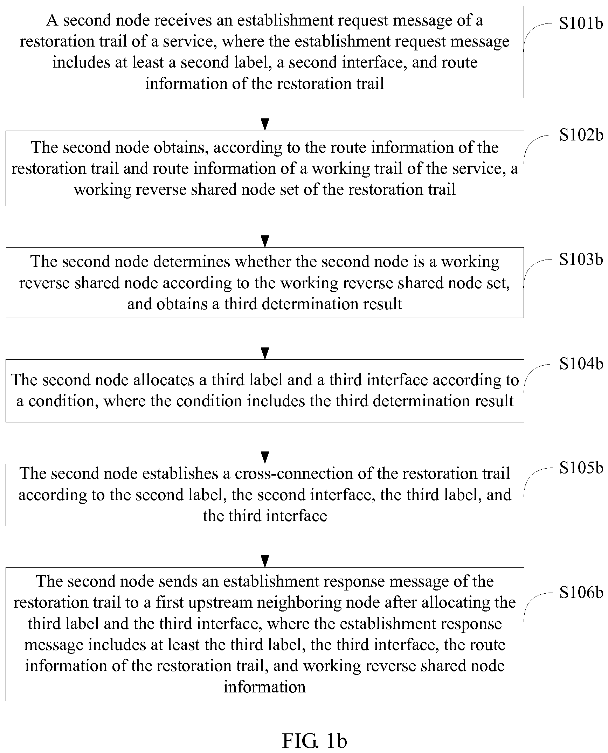

According to another embodiment of the present invention, a process of a method for establishing a restoration path is shown in FIG. 1b, and the method includes the following steps:
Step S101b: A second node receives an establishment request message of a restoration path of a service, where the establishment request message includes at least a second label, a second interface, and route information of the restoration path, the second label is a forwarding label from a first upstream neighboring node to the second node, the second interface is an outbound interface from the first upstream neighboring node to the second node, and the first upstream neighboring node is an upstream neighboring node of the second node on the restoration path.
Step S102b: The second node obtains, according to the route information of the restoration path and route information of a working path of the service, a working reverse-shared node set of the restoration path, where a working reverse-shared node in the working reverse-shared node set has a same upstream neighboring node on the restoration path and the working path.
Step S103b: The second node determines whether the second node is a working reverse-shared node according to the working reverse-shared node set, and obtains a third determination result.
Step S104b: The second node allocates a third label and a third interface according to a condition, where the condition includes the third determination result, the third label is a forwarding label from the second node to the first upstream neighboring node, and the third interface is an outbound interface from the second node to the first upstream neighboring node.
Step S105b: The second node establishes a cross-connection of the restoration path according to the second label, the second interface, the third label, and the third interface.
Step S106b: After allocating the third label and the third interface, the second node sends an establishment response message of the restoration path to the first upstream neighboring node, where the establishment response message includes at least the third label, the third interface, the route information of the restoration path, and working reverse-shared node information, and the working reverse-shared node information is a node set obtained by removing the second node from the working reverse-shared node set.

Further, that the second node allocates a third label and a third interface according to a condition, where the condition includes the third determination result, may specifically include:
if the third determination result is that the second node is a working reverse-shared node, the second node allocates the third label and the third interface, where the third label is the same as a forwarding label from the second node to a second upstream neighboring node, the third interface is the same as an outbound interface from the second node to the second upstream neighboring node, and the second upstream neighboring node is an upstream neighboring node of the second node on the working path.

Further, the method may further include:
the establishment request message further includes shared resource indication information, and before obtaining the working reverse-shared node set, the second node determines, according to the shared resource indication information, that the restoration path shares a bandwidth resource with the working path.

The restoration path may further share a bandwidth resource with the working path and a protection path, and based on the foregoing step S101b to step S106b, the method may further include:
the second node obtains, according to the route information of the restoration path and route information of a protection path of the service, a protection reverse-shared node set of the restoration path, where a protection reverse-shared node in the protection reverse-shared node set has a same upstream neighboring node on the restoration path and the protection path;
the second node determines whether the second node is a protection reverse-shared node according to the protection reverse-shared node set, and obtains a fourth determination result; and
the condition further includes the fourth determination result; and the establishment response message further includes protection reverse-shared node information, where the protection reverse-shared node information is a node set obtained by removing the second node from the protection reverse-shared node set.

Further, that the second node allocates a third label and a third interface according to a condition, where the condition includes the third determination result and the fourth determination result, may specifically include:
if the third determination result is that the second node is a working reverse-shared node, the second node allocates the third label and the third interface, where the third label is the same as a forwarding label from the second node to the second upstream neighboring node, the third interface is the same as an outbound interface from the second node to the second upstream neighboring node, and the second upstream neighboring node is an upstream neighboring node of the second node on the working path; and
if the fourth determination result is that the second node is a protection reverse-shared node, the second node allocates the third label and the third interface, where the third label is the same as a forwarding label from the second node to a third upstream neighboring node, the third interface is the same as an outbound interface from the second node to the third upstream neighboring node, and the third upstream neighboring node is an upstream neighboring node of the second node on the protection path.

Further, the method may further include:
the establishment request message further includes shared resource indication information, and before obtaining the protection reverse-shared node set, the second node determines, according to the shared resource indication information, that the restoration path shares a bandwidth resource with the working path and the protection path.

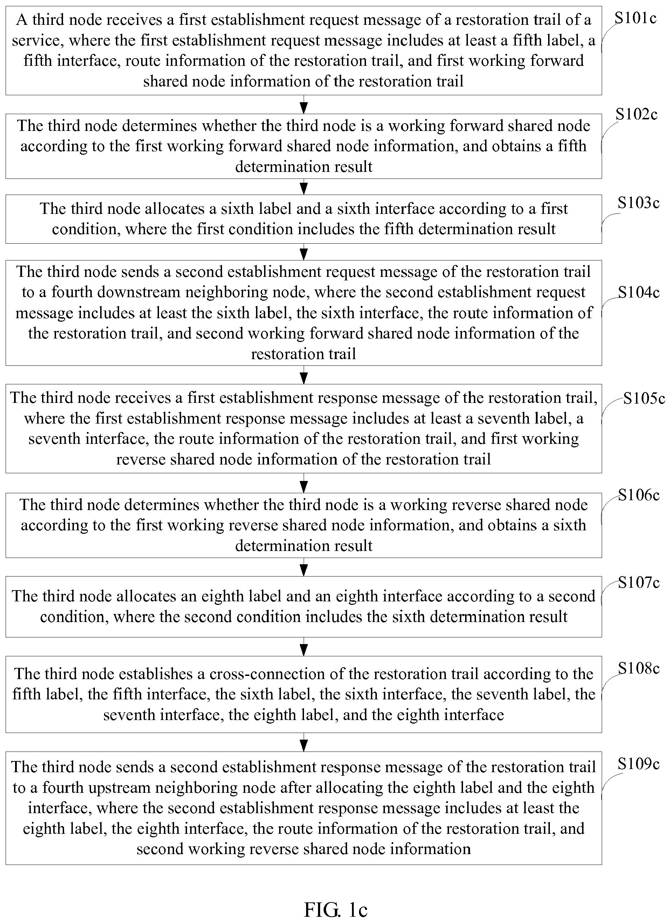

According to yet another embodiment of the present invention, a process of a method for establishing a restoration path is shown in FIG. 1c, and the method includes the following steps:
Step S101c: A third node receives a first establishment request message of a restoration path of a service, where the first establishment request message includes at least a fifth label, a fifth interface, route information of the restoration path, and first working forward-shared node information of the restoration path, the fifth label is a forwarding label from a fourth upstream neighboring node to the third node, the fifth interface is an outbound interface from the fourth upstream neighboring node to the third node, the fourth upstream neighboring node is an upstream neighboring node of the third node on the restoration path, and a working forward-shared node in the first working forward-shared node information has a same downstream neighboring node on the restoration path and a working path.
Step S102c: The third node determines whether the third node is a working forward-shared node according to the first working forward-shared node information, and obtains a fifth determination result.
Step S103c: The third node allocates a sixth label and a sixth interface according to a first condition, where the first condition includes the fifth determination result, the sixth label is a forwarding label from the third node to a fourth downstream neighboring node, the sixth interface is an outbound interface from the third node to the fourth downstream neighboring node, and the fourth downstream neighboring node is a downstream neighboring node of the third node on the restoration path.
Step S104c: The third node sends a second establishment request message of the restoration path to the fourth downstream neighboring node, where the second establishment request message includes at least the sixth label, the sixth interface, the route information of the restoration path, and second working forward-shared node information of the restoration path, and the second working forward-shared node information is a node set obtained by removing the third node from the first working forward-shared node information.
Step S105c: The third node receives a first establishment response message of the restoration path, where the first establishment response message includes at least a seventh label, a seventh interface, the route information of the restoration path, and first working reverse-shared node information of the restoration path, the seventh label is a forwarding label from the fourth downstream neighboring node to the third node, the seventh interface is an outbound interface from the fourth downstream neighboring node to the third node, and a working reverse-shared node in the first working reverse-shared node information has a same upstream neighboring node on the restoration path and the working path.
Step S106c: The third node determines whether the third node is a working reverse-shared node according to the first working reverse-shared node information, and obtains a sixth determination result.
Step S107c: The third node allocates an eighth label and an eighth interface according to a second condition, where the second condition includes the sixth determination result, the eighth label is a forwarding label from the third node to the fourth upstream neighboring node, and the eighth interface is an outbound interface from the third node to the fourth upstream neighboring node.
Step S108c: The third node establishes a cross-connection of the restoration path according to the fifth label, the fifth interface, the sixth label, the sixth interface, the seventh label, the seventh interface, the eighth label, and the eighth interface.
Step S109c: After allocating the eighth label and the eighth interface, the third node sends a second establishment response message of the restoration path to the fourth upstream neighboring node, where the second establishment response message includes at least the eighth label, the eighth interface, the route information of the restoration path, and second working reverse-shared node information, and the second working reverse-shared node information is a node set obtained by removing the third node from the first working reverse-shared node information.

Further, that the third node allocates a sixth label and a sixth interface according to a first condition, where the first condition includes the fifth determination result, may specifically include: If the fifth determination result is that the third node is a working forward-shared node, the third node allocates the sixth label and the sixth interface, where the sixth label is the same as a forwarding label from the third node to a fifth downstream neighboring node, the sixth interface is the same as an outbound interface from the third node to the fifth downstream neighboring node, and the fifth downstream neighboring node is a downstream neighboring node of the third node on the working path.

That the third node allocates an eighth label and an eighth interface according to a second condition, where the second condition includes the sixth determination result, may specifically include: If the sixth determination result is that the third node is a working reverse-shared node, the third node allocates the eighth label and the eighth interface, where the eighth label is the same as a forwarding label from the third node to a fifth upstream neighboring node, the eighth interface is the same as an outbound interface from the third node to the fifth upstream neighboring node, and the fifth upstream neighboring node is an upstream neighboring node of the third node on the working path.

Further, the method may further include:
the first establishment request message further includes shared resource indication information; the second establishment request message further includes shared resource indication information; and before determining whether the third node is a working forward-shared node, the third node determines, according to the shared resource indication information, that the restoration path shares a bandwidth resource with the working path.

The restoration path may further share a bandwidth resource with the working path and a protection path, and based on the foregoing step S101c to step S109c, the method may further include:
the first establishment request message further includes first protection forward-shared node information of the restoration path; and a protection forward-shared node in the first protection forward-shared node information has a same downstream neighboring node on the restoration path and the working path;
the third node determines whether the third node is a protection forward-shared node according to the first protection forward-shared node information, and obtains a seventh determination result;
the first condition further includes the seventh determination result;
the second establishment request message further includes second protection forward-shared node information, where the second protection forward-shared node information is a node set obtained by removing the third node from the first protection forward-shared node information;
the first establishment response message further includes first protection reverse-shared node information of the restoration path; and a protection reverse-shared node in the first protection reverse-shared node information has a same upstream neighboring node on the restoration path and the working path;
the third node determines whether the third node is a protection reverse-shared node according to the first protection reverse-shared node information, and obtains an eighth determination result;
the second condition further includes the eighth determination result; and
the second establishment response message further includes second protection reverse-shared node information, where the second protection reverse-shared node information is a node set obtained by removing the third node from the first protection reverse-shared node information.

Further, that the third node allocates a sixth label and a sixth interface according to a first condition, where the first condition includes the fifth determination result and the seventh determination result, may specifically include: If the fifth determination result is that the third node is a working forward-shared node, the third node allocates the sixth label and the sixth interface, where the sixth label is the same as a forwarding label from the third node to the fifth downstream neighboring node, the sixth interface is the same as an outbound interface from the third node to the fifth downstream neighboring node, and the fifth downstream neighboring node is a downstream neighboring node of the third node on the working path; and if the seventh determination result is that the third node is a protection forward-shared node, the third node allocates the sixth label and the sixth interface, where the sixth label is the same as a forwarding label from the third node to a sixth downstream neighboring node, the sixth interface is the same as an outbound interface from the third node to the sixth downstream neighboring node, and the sixth downstream neighboring node is a downstream neighboring node of the third node on the protection path; and
that the third node allocates an eighth label and an eighth interface according to a second condition, where the second condition includes the sixth determination result and the eighth determination result, specifically includes: If the sixth determination result is that the third node is a working reverse-shared node, the third node allocates the eighth label and the eighth interface, where the eighth label is the same as a forwarding label from the third node to the fifth upstream neighboring node, and the eighth interface is the same as an outbound interface from the third node to the fifth upstream neighboring node; and if the eighth determination result is that the third node is a protection reverse-shared node, the third node allocates the eighth label and the eighth interface, where the eighth label is the same as a forwarding label from the third node to a sixth upstream neighboring node, the eighth interface is the same as an outbound interface from the third node to the sixth upstream neighboring node, and the sixth upstream neighboring node is an upstream neighboring node of the third node on the protection path.

Further, the method may further include:
the first establishment request message further includes shared resource indication information; the second establishment request message further includes shared resource indication information; and before determining whether the third node is a working forward-shared node, the third node determines, according to the shared resource indication information, that the restoration path shares a bandwidth resource with the working path and the protection path.

With reference to the accompanying drawings, the following describes, in detail, a method, a node device, and a system for establishing a restoration path according to the embodiments of the present invention.

It should be made clear that the described embodiments are merely a part rather than all of the embodiments of the present invention. All other embodiments obtained by a person of ordinary skill in the art based on the embodiments of the present invention without creative efforts shall fall within the protection scope of the present invention.

### Embodiment 1

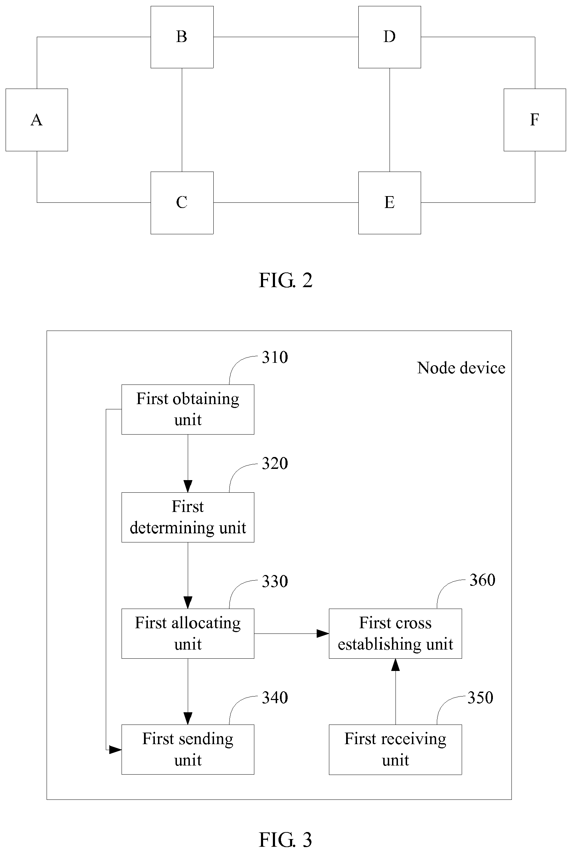

An embodiment of the present invention provides a method for establishing a restoration path. In a network shown in FIG. 2, the network includes nodes A, B, C, D, E, and F, and a solid line between nodes indicates an optical fiber link. A route of a working path of a service is A-B-D-F, and a corresponding bandwidth resource is allocated to the working path. A bandwidth resource on a link A-C and a bandwidth resource on a link E-F are occupied by another path, and may be occupied by a working path or a protection path of another service or occupied by a protection path of a service A-F. The node A is a source node of a signaling message, and the node F is a sink node of the signaling message. The node A and the node F have known a route of one or more restoration paths of the service. Downstream is a direction from a source node to a sink node, and upstream is a direction from a sink node to a source node. To establish one restoration path of the service, the method specifically includes the following steps:
Step S201: The node A obtains, according to route information of a restoration path of a service and route information of a working path of the service, a working forward-shared node set of the restoration path.

In this embodiment, the route of the working path is A-B-D-F, and a route of the restoration path is A-B-C-E-D-F, where a bandwidth resource of the working path is reused in the segments A-B and D-F.

Specifically, the node A may search for a corresponding restoration path according to fault information of the working path, and obtain route information of the restoration path. For example, due to a fault on a link B-D, the working path of the service encounters a fault, and the node A may obtain fault information by means of signaling notifying, fault alarm transferring, and the like, where the fault information may include a fault location, a fault type of a node fault or a link fault, and so on. The node A finds a corresponding restoration path according to the fault information, and obtains the route information of the restoration path, which is A-B-C-E-D-F. The corresponding restoration path can bypass the fault, which ensures service restoration.

The node A obtains, according to the route information of the restoration path of the service and the route information of the working path of the service, the working forward-shared node set of the restoration path, where a working forward-shared node in the working forward-shared node set is a node that has a same downstream neighboring node on the restoration path and the working path.

Among the nodes on the restoration path, a downstream neighboring node of the node A on both the restoration path and the working path is B, a downstream neighboring node of the node D on both the restoration path and the working path is F; therefore, the working forward-shared node set of the restoration path is (A, D), and the node A and the node D are working forward-shared nodes.
Step S202: The node A determines whether the node A is a working forward-shared node according to the working forward-shared node set, and obtains a determination result; and the node A allocates, according to the determination result, a forwarding label and an outbound interface that are from the node A to the node B on the restoration path.

The working forward-shared node set of the restoration path is (A, D), and the node A obtains, according to the set, a determination result that the node A is a working forward-shared node.

The node A may allocate, according to the foregoing determination result, the forwarding label and the outbound interface that are from the node A to the node B on the restoration path. The determination result is: The node A is a working forward-shared node; therefore, the forwarding label from the node A to the node B on the restoration path is the same as a forwarding label from the node A to the node B on the working path, and the outbound interface from the node A to the node B on the restoration path is the same as an outbound interface from the node A to the node B on the working path.
Step S203: The node A sends an establishment request message to the downstream neighboring node B on the restoration path, where the establishment request message includes at least the forwarding label and the outbound interface that are from the node A to the node B on the restoration path, the route information of the restoration path, and working forward-shared node information.
   In this embodiment, the working forward-shared node information is a node set obtained by removing the node A from the working forward-shared node set (A, D). That is, the working forward-shared node information is a node set (D).
Step S204: The node B receives the establishment request message of the restoration path that is sent by the node A, where the establishment request message includes at least the forwarding label and the outbound interface that are from the node A to the node B on the restoration path, the route information of the restoration path, and the working forward-shared node information of the restoration path.
Step S205: The node B determines whether the node B is a working forward-shared node according to the received working forward-shared node information, and obtains a determination result; and the node B allocates, according to the determination result, a forwarding label and an outbound interface that are from the node B to the node C on the restoration path.

In this embodiment, the received working forward-shared node information is (D), from which the node B obtains a determination result that the node B is not a working forward-shared node.

The node B may allocate, according to the foregoing determination result, the forwarding label and the outbound interface that are from the node B to the node C on the restoration path. The determination result is: The node B is not a working forward-shared node; therefore, the node B randomly allocates the forwarding label and the outbound interface that are from the node B to the node C on the restoration path.
Step S206: The node B sends an establishment request message of the restoration path to the downstream neighboring node C on the restoration path, where the establishment request message includes at least the forwarding label and the outbound interface that are from the node B to the node C on the restoration path, the route information of the restoration path, and working forward-shared node information.
   The working forward-shared node information included in the establishment request message is a node set obtained by removing the node B from the received working forward-shared node information (D), that is, the working forward-shared node information is the node set (D).
Step S207: The node C receives the establishment request message of the restoration path that is sent by the node B, where the establishment request message includes at least the forwarding label and the outbound interface that are from the node B to the node C on the restoration path, the route information of the restoration path, and the working forward-shared node information.
Step S208: The node C determines whether the node C is a working forward-shared node according to the received working forward-shared node information, and obtains a determination result; and the node C allocates, according to the determination result, a forwarding label and an outbound interface that are from the node C to the node E on the restoration path.

In this embodiment, the received working forward-shared node information is (D), from which the node C obtains a determination result that the node C is not a working forward-shared node.

The node C may allocate, according to the foregoing determination result, the forwarding label and the outbound interface that are from the node C to the node E on the restoration path. The determination result is: The node C is not a working forward-shared node; therefore, the node C randomly allocates the forwarding label and the outbound interface that are from the node C to the node E on the restoration path.
Step S209: The node C sends an establishment request message of the restoration path to the downstream neighboring node E on the restoration path, where the establishment request message includes at least the forwarding label and the outbound interface that are from the node C to the node E on the restoration path, the route information of the restoration path, and working forward-shared node information.
   The working forward-shared node information included in the establishment request message is a node set obtained by removing the node C from the received working forward-shared node information (D). That is, the working forward-shared node information is the node set (D).
Step S210: The node E receives the establishment request message of the restoration path that is sent by the node C, and performs a processing step similar to that performed by the node C.
Step S211: The node D receives an establishment request message of the restoration path that is sent by the node E, where the establishment request message includes at least a forwarding label and an outbound interface that are from the node E to the node D on the restoration path, the route information of the restoration path, and working forward-shared node information.
Step S212: The node D determines whether the node D is a working forward-shared node according to the received working forward-shared node information, and obtains a determination result; and the node D allocates, according to the determination result, a forwarding label and an outbound interface that are from the node D to the node F on the restoration path.

In this embodiment, the received working forward-shared node information is (D), from which the node D obtains a determination result that the node D is a working forward-shared node.

The node D may allocate, according to the foregoing determination result, the forwarding label and the outbound interface that are from the node D to the node F on the restoration path. The determination result is: The node D is a working forward-shared node; therefore, the forwarding label from the node D to the node F on the restoration path is the same as a forwarding label from the node D to the node F on the working path, and the outbound interface from the node D to the node F on the restoration path is the same as an outbound interface from the node D to the node F on the working path.
Step S213: The node D sends an establishment request message of the restoration path to the downstream neighboring node F on the restoration path, where the establishment request message includes at least the forwarding label and the outbound interface that are from the node D to the node F on the restoration path, and the route information of the restoration path.
   The working forward-shared node information included in the establishment request message is a node set obtained by removing the node D from the received working forward-shared node information (D). That is, the working forward-shared node information is empty and the establishment request message does not need to include the working forward-shared node information.
Step S214: The node F receives the establishment request message of the restoration path that is sent by the node D, where the establishment request message includes at least the forwarding label and the outbound interface that are from the node D to the node F on the restoration path, and the route information of the restoration path.
Step S215: The node F obtains, according to the route information of the restoration path and the route information of the working path, a working reverse-shared node set of the restoration path.

In this embodiment, a working reverse-shared node in the working reverse-shared node set is a node that has a same upstream neighboring node on the restoration path and the working path.

The route of the working path is A-B-D-F, and the route of the restoration path is A-B-C-E-D-F, where the bandwidth resource of the working path is reused in the segments A-B and D-F. Among the nodes on the restoration path, an upstream neighboring node of the node F on both the restoration path and the working path is D, an upstream neighboring node of the node B on both the restoration path and the working path is A; therefore, the working reverse-shared node set of the restoration path is (F, B), and the node F and the node B are working reverse-shared nodes.
Step S216: The node F determines whether the node F is a working reverse-shared node according to the working reverse-shared node set, and obtains a determination result; and the node F allocates, according to the determination result, a forwarding label and an outbound interface that are from the node F to the node D on the restoration path.

In this embodiment, the working reverse-shared node set is (F, B), from which the node F obtains a determination result that the node F is a working reverse-shared node.

The node F may allocate, according to the foregoing determination result, the forwarding label and the outbound interface that are from the node F to the node D on the restoration path. The determination result is: The node F is a working reverse-shared node; therefore, the forwarding label from the node F to the node D on the restoration path is the same as a forwarding label from the node F to the node D on the working path, and the outbound interface from the node F to the node D on the restoration path is the same as an outbound interface from the node F to the node D on the working path.
Step S217: The node F establishes a cross-connection of the restoration path according to the forwarding label from the node D to the node F, the outbound interface from the node D to the node F, the forwarding label from the node F to the node D, and the outbound interface from the node F to the node D that are on the restoration path.
   The node F may obtain an inbound interface from the node D to the node F according to the outbound interface from the node D to the node F, and establish a bidirectional cross-connection of the restoration path in combination with an inbound/outbound interface of the service on the node F, the outbound interface from the node F to the node D, the forwarding label from the node D to the node F, and the forwarding label from the node F to the node D.
Step S218: After allocating the forwarding label and the outbound interface that are from the node F to the node D on the restoration path, the node F sends an establishment response message of the restoration path to the upstream neighboring node D on the restoration path, where the establishment response message includes at least the forwarding label and the outbound interface that are from the node F to the node D on the restoration path, the route information of the restoration path, and working reverse-shared node information.
   The working reverse-shared node information included in the establishment response message is a node set (B) obtained by removing the node F from the working reverse-shared node set (F, B).
Step S219: The node D receives the establishment response message of the restoration path that is sent by the node F, where the establishment response message includes at least the forwarding label and the outbound interface that are from the node F to the node D on the restoration path, the route information of the restoration path, and the working reverse-shared node information.
Step S220: The node D determines whether node D is a working reverse-shared node according to the received working reverse-shared node information, and obtains a determination result; and the node D allocates, according to the determination result, a forwarding label and an outbound interface that are from the node D to the node E on the restoration path.

In this embodiment, the received working reverse-shared node information is (B), from which the node D obtains a determination result that the node D is not a working reverse-shared node.

The node D may allocate, according to the foregoing determination result, the forwarding label and the outbound interface that are from the node D to the node E on the restoration path. The determination result is: The node D is not a working reverse-shared node; therefore, the node D randomly allocates the forwarding label and the outbound interface that are from the node D to the node E on the restoration path.
Step S221: The node D establishes a cross-connection of the restoration path according to the forwarding label from the node E to the node D, the outbound interface from the node E to the node D, the forwarding label from the node D to the node E, the outbound interface from the node D to the node E, the forwarding label from the node F to the node D, the outbound interface from the node F to the node D, the forwarding label from the node D to the node F, and the outbound interface from the node D to the node F, which are on the restoration path.
   The node D may obtain an inbound interface from the node E to the node D according to the outbound interface from the node E to the node D, obtain an inbound interface from the node F to the node D according to the outbound interface from the node F to the node D, and establish a bidirectional cross-connection of the restoration path in combination with the outbound interface from the node D to the node E, the outbound interface from the node D to the node F, the forwarding label from the node D to the node E, the forwarding label from the node D to the node F, the forwarding label from the node E to the node D, and the forwarding label from the node F to the node D.
Step S222: After allocating the forwarding label and the outbound interface that are from the node D to the node E on the restoration path, the node D sends an establishment response message of the restoration path to the upstream neighboring node E on the restoration path, where the establishment response message includes at least the forwarding label and the outbound interface that are from the node D to the node E on the restoration path, the route information of the restoration path, and working reverse-shared node information.
   The working reverse-shared node information included in the establishment response message is a node set obtained by removing the node D from the received working reverse-shared node information (B). That is, the working reverse-shared node information is the node set (B).
Step S223: The node E receives the establishment response message of the restoration path that is sent by the node D, where the establishment response message includes at least the forwarding label and the outbound interface that are from the node D to the node E on the restoration path, the route information of the restoration path, and the working reverse-shared node information.
Step S224: The node E determines whether the node E is a working reverse-shared node according to the received working reverse-shared node information, and obtains a determination result; and the node E allocates, according to the determination result, a forwarding label and an outbound interface that are from the node E to the node C on the restoration path.

In this embodiment, the received working reverse-shared node information is (B), from which the node E obtains a determination result that the node E is not a working reverse-shared node.

The node E may allocate, according to the foregoing determination result, the forwarding label and the outbound interface that are from the node E to the node C on the restoration path. The determination result is: The node E is not a working reverse-shared node; therefore, the node E randomly allocates the forwarding label and the outbound interface that are from the node E to the node C on the restoration path.
Step S225: The node E establishes a cross-connection of the restoration path according to the forwarding label from the node C to the node E, the outbound interface from the node C to the node E, the forwarding label from the node E to the node C, the outbound interface from the node E to the node C, the forwarding label from the node E to the node D, the outbound interface from the node E to the node D, the forwarding label from the node D to the node E, and the outbound interface from the node D to the node E, which are on the restoration path.
   The node E may obtain an inbound interface from the node C to the node E according to the outbound interface from the node C to the node E, obtain an inbound interface from the node D to the node E according to the outbound interface from the node D to the node E, and establish a bidirectional cross-connection of the restoration path in combination with the outbound interface from the node E to the node C, the outbound interface from the node E to the node D, the forwarding label from the node C to the node E, the forwarding label from the node E to the node C, the forwarding label from the node D to the node E, and the forwarding label from the node E to the node D.
Step S226: After allocating the forwarding label and the outbound interface that are from the node E to the node C on the restoration path, the node E sends an establishment response message of the restoration path to the upstream neighboring node C on the restoration path, where the establishment response message includes at least the forwarding label and the outbound interface that are from the node E to the node C on the restoration path, the route information of the restoration path, and working reverse-shared node information.
   The working reverse-shared node information included in the establishment response message is a node set obtained by removing the node E from the received working reverse-shared node information (B). That is, the working reverse-shared node information is the node set (B).
Step S227: The node C receives the establishment response message of the restoration path that is sent by the node E, and performs a processing step similar to that performed by the node E.
Step S228: The node B receives an establishment response message of the restoration path that is sent by the node C, where the establishment response message includes at least a forwarding label and an outbound interface that are from the node C to the node B on the restoration path, the route information of the restoration path, and working reverse-shared node information.
Step S229: The node B determines whether the node B is a working reverse-shared node according to the received working reverse-shared node information, and obtains a determination result; and the node B allocates, according to the determination result, a forwarding label and an outbound interface that are from the node B to the node A on the restoration path.

In this embodiment, the received working reverse-shared node information is (B), from which the node B obtains a determination result that the node B is a working reverse-shared node.

The node B may allocate, according to the foregoing determination result, the forwarding label and the outbound interface that are from the node B to the node A on the restoration path. The determination result is: The node B is a working reverse-shared node; therefore, the forwarding label from the node B to the node A on the restoration path is the same as a forwarding label from the node B to the node A on the working path, and the outbound interface from the node B to the node A on the restoration path is the same as an outbound interface from the node B to the node A on the working path.
Step S230: The node B establishes a cross-connection of the restoration path according to the forwarding label from the node A to the node B, the outbound interface from the node A to the node B, the forwarding label from the node B to the node C, the outbound interface from the node B to the node C, the forwarding label from the node C to the node B, the outbound interface from the node C to the node B, the forwarding label from the node B to the node A, and the outbound interface from the node B to the node A that are on the restoration path.
   The node B may obtain an inbound interface from the node A to the node B according to the outbound interface from the node A to the node B, obtain an inbound interface from the node C to the node B according to the outbound interface from the node C to the node B, and establish a bidirectional cross-connection of the restoration path in combination with the outbound interface from the node B to the node C, the outbound interface from the node B to the node A, the forwarding label from the node A to the node B, the forwarding label from the node B to the node A, the forwarding label from the node C to the node B, and the forwarding label from the node B to the node C.
Step S231: After allocating the forwarding label and the outbound interface that are from the node B to the node A on the restoration path, the node B sends an establishment response message of the restoration path to the upstream neighboring node A on the restoration path, where the establishment response message includes at least the forwarding label and the outbound interface that are from the node B to the node A on the restoration path, and the route information of the restoration path.
   The working reverse-shared node information included in the establishment response message is a node set obtained by removing the node B from the received working reverse-shared node information (B). That is, the working reverse-shared node information is empty and the establishment response message does not need to include the working reverse-shared node information.
Step S232: The node A receives the establishment response message of the restoration path that is sent by the node B, where the establishment response message includes at least the forwarding label and the outbound interface that are from the node B to the node A on the restoration path, and the route information of the restoration path.
Step S233: The node A establishes a cross-connection of the restoration path according to the forwarding label from the node A to the node B, the outbound interface from the node A to the node B, the forwarding label from the node B to the node A, and the outbound interface from the node B to the node A, which are on the restoration path.

The node A may obtain an inbound interface from the node B to the node A according to the outbound interface from the node B to the node A, and establish a bidirectional cross-connection of the restoration path in combination with an inbound/outbound interface of the service on the node A, the outbound interface from the node A to the node B, the forwarding label from the node A to the node B, and the forwarding label from the node B to the node A.

According to the method for establishing a restoration path provided in the embodiment of the present invention, a node set that is on a restoration path and may share a bandwidth resource with a working path is obtained by using a source node and a sink node, information about the node set is transferred to another node on the restoration path by using signaling, and each node allocates a label and an outbound interface according to the information about the node set. Therefore, automatic establishment of the restoration path is implemented, a bandwidth resource of the restoration path is ensured, and a service can be restored in time and effectively after the working path encounters a fault, thereby improving network reliability. In addition, by using a technical solution provided in the embodiment of the present invention, a bandwidth resource on an existing working path can be further reused, which improves network resource utilization and reduces a networking cost.

In another embodiment, based on the foregoing step S201 to step S233, an establishment request message of a restoration path may further include shared resource indication information.

The shared resource indication information is used to indicate that the restoration path shares a bandwidth resource with a working path. A node that receives the establishment request message of the restoration path determines, according to the shared resource indication information, that the restoration path shares a bandwidth resource with the working path, and then determines whether the node is a working forward-shared node according to working forward-shared node information, or determines whether the node is a working reverse-shared node according to working reverse-shared node information.

A manner in which an establishment request message of a restoration path includes shared resource indication information may be applied to the following scenarios: If a restoration path to be established needs to share a bandwidth resource with a working path, the establishment request message of the restoration path includes shared resource indication information; and if the restoration path to be established does not need to share a bandwidth resource with the working path, the establishment request message of the restoration path does not include the shared resource indication information. A node that receives the establishment request message of the restoration path performs corresponding processing according to whether the establishment request message carries the shared resource indication information.

In addition to automatically establishing a restoration path, ensuring a bandwidth resource of the restoration path, reusing a bandwidth resource of an existing working path, and improving network resource utilization, the method for establishing a restoration path according to the embodiment of the present invention can also be compatible with two implementation manners: The restoration path shares a bandwidth resource with the working path, and the restoration path does not share a bandwidth resource with the working path.

In another embodiment, based on the foregoing step S201 to step S233, an establishment request message of a restoration path may further include protection forward-shared node information of the restoration path, and an establishment response message may further include protection reverse-shared node information of the restoration path.

If a protection path further exists for a service, the establishment request message of the restoration path may include both working forward-shared node information and protection forward-shared node information, so that a node determines whether the node is a working forward-shared node or a protection forward-shared node.

A node that receives the establishment request message of the restoration path allocates a forwarding label and an outbound interface according to whether the node is a working forward-shared node or a protection forward-shared node:
if the node determines that the node is a working forward-shared node, a forwarding label from the node to a downstream neighboring node on the restoration path is the same as a forwarding label from the node to a downstream neighboring node on the working path, and an outbound interface from the node to the downstream neighboring node on the restoration path is the same as an outbound interface from the node to the downstream neighboring node on the working path; and if the node determines that the node is a protection forward-shared node, a forwarding label from the node to a downstream neighboring node on the restoration path is the same as a forwarding label from the node to a downstream neighboring node on the protection path, and an outbound interface from the node to the downstream neighboring node on the restoration path is the same as an outbound interface from the node to the downstream neighboring node on the protection path.

The connection establishment response message of the restoration path may include both working reverse-shared node information and protection reverse-shared node information, so that a node determines whether the node is a working reverse-shared node or a protection reverse-shared node. Processing that the node performs after receiving the establishment response message is similar to processing that the node performs after receiving the foregoing establishment request message, which is not described herein again. Therefore, that the restoration path shares a bandwidth resource with the working path and the protection path is implemented.

The node A, as a source node of the restoration path, may directly obtain a working forward-shared node set and a protection forward-shared node set according to route information of the protection path and route information of the restoration path, and transfers, to the downstream neighboring node B by using an establishment request message, working forward-shared node information and protection forward-shared node information that exclude the node A. The node F, as a sink node of the restoration path, may directly obtain a working reverse-shared node set and a protection reverse-shared node set according to the route information of the protection path and the route information of the restoration path, and transfers, to the upstream neighboring node D by using an establishment response message, working reverse-shared node information and protection reverse-shared node information that exclude the node F.

In this case, if the establishment request message of the restoration path includes shared resource indication information, the shared resource indication information indicates that the restoration path may share a bandwidth resource with the working path and the protection path.

According to the method for establishing a restoration path provided in the embodiment of the present invention, a node set that is on a restoration path and may share a bandwidth resource with a working path and a node set that is on the restoration path and may share a bandwidth resource with a protection path are obtained by using a source node and a sink node, information about the node sets is transferred to another node on the restoration path by using signaling, and each node allocates a label and an outbound interface according to the information about the node sets. Therefore, automatic establishment of the restoration path is implemented, a bandwidth resource of the restoration path is ensured, and a service can be restored in time and effectively after the working path encounters a fault, thereby improving network reliability. In addition, according to a technical solution provided in the embodiment of the present invention, a bandwidth resource on an existing working path and protection path can be further reused, which improves network resource utilization and reduces a networking cost.

In the foregoing embodiment, a route of the restoration path may include only a source node and a sink node, and does not include an intermediate node; or may include a source node, a sink node, and one or more intermediate nodes. The foregoing embodiment describes a case that the route of the restoration path includes the source node, the sink node, and a plurality of intermediate nodes.

### Embodiment 2

An embodiment of the present invention provides a node device, and as shown in FIG. 3, the node device includes:
a first obtaining unit 310, configured to obtain, according to route information of a restoration path of a service and route information of a working path of the service, a working forward-shared node set of the restoration path, where a working forward-shared node in the working forward-shared node set has a same downstream neighboring node on the restoration path and the working path;
a first determining unit 320, configured to determine whether the node device is a working forward-shared node according to the working forward-shared node set, and obtain a first determination result;
a first allocating unit 330, configured to allocate a first label and a first interface according to a condition, where the condition includes the first determination result, the first label is a forwarding label from the node device to a first downstream neighboring node, the first interface is an outbound interface from the node device to the first downstream neighboring node, and the first downstream neighboring node is a downstream neighboring node of the node device on the restoration path;
a first sending unit 340, configured to send an establishment request message to the first downstream neighboring node, where the establishment request message includes at least the first label, the first interface, the route information of the restoration path, and working forward-shared node information, and the working forward-shared node information is a node set obtained by removing the node device from the working forward-shared node set;
a first receiving unit 350, configured to receive an establishment response message of the restoration path, where the establishment response message includes at least a fourth label, a fourth interface, and the route information of the restoration path, the fourth label is a forwarding label from the first downstream neighboring node to the node device, and the fourth interface is an outbound interface from the first downstream neighboring node to the node device; and
a first cross establishing unit 360, configured to establish a cross-connection of the restoration path according to the first label, the first interface, the fourth label, and the fourth interface.

Further, the first allocating unit 330 may specifically include:
if the first determination result is that the node device is a working forward-shared node, the node device allocates the first label and the first interface, where the first label is the same as a forwarding label from the node device to a second downstream neighboring node, the first interface is the same as an outbound interface from the node device to the second downstream neighboring node, and the second downstream neighboring node is a downstream neighboring node of the node device on the working path.

Further, the establishment request message may further include shared resource indication information, where the shared resource indication information is used to indicate that the restoration path shares a bandwidth resource with the working path.

Further, the node device may further include:
a first searching unit 370, configured to obtain the route information of the restoration path by searching according to fault information of the working path.

### Embodiment 3

An embodiment of the present invention provides a node device, and as shown in FIG. 3, the node device includes:
a first obtaining unit 310, configured to obtain, according to route information of a restoration path of a service and route information of a working path of the service, a working forward-shared node set of the restoration path, where a working forward-shared node in the working forward-shared node set has a same downstream neighboring node on the restoration path and the working path; and configured to obtain, according to the route information of the restoration path and route information of a protection path of the service, a protection forward-shared node set of the restoration path, where a protection forward-shared node in the protection forward-shared node set has a same downstream neighboring node on the restoration path and the protection path;
a first determining unit 320, configured to determine whether the node device is a working forward-shared node according to the working forward-shared node set, and obtain a first determination result; and configured to determine whether the node device is a protection forward-shared node according to the protection forward-shared node set, and obtain a second determination result;
a first allocating unit 330, configured to allocate a first label and a first interface according to a condition, where the condition includes the first determination result and the second determination result, the first label is a forwarding label from the node device to a first downstream neighboring node, the first interface is an outbound interface from the node device to the first downstream neighboring node, and the first downstream neighboring node is a downstream neighboring node of the node device on the restoration path;
a first sending unit 340, configured to send an establishment request message to the first downstream neighboring node, where the establishment request message includes at least the first label, the first interface, the route information of the restoration path, working forward-shared node information, and protection forward-shared node information, the working forward-shared node information is a node set obtained by removing the node device from the working forward-shared node set, and the protection forward-shared node information is a node set obtained by removing the node device from the protection forward-shared node set;
a first receiving unit 350, configured to receive an establishment response message of the restoration path, where the establishment response message includes at least a fourth label, a fourth interface, and the route information of the restoration path, the fourth label is a forwarding label from the first downstream neighboring node to the node device, and the fourth interface is an outbound interface from the first downstream neighboring node to the node device; and
a first cross establishing unit 360, configured to establish a cross-connection of the restoration path according to the first label, the first interface, the fourth label, and the fourth interface.

Further, the first allocating unit 330 may specifically include:
if the first determination result is that the node device is a working forward-shared node, the node device allocates the first label and the first interface, where the first label is the same as a forwarding label from the node device to a second downstream neighboring node, the first interface is the same as an outbound interface from the node device to the second downstream neighboring node, and the second downstream neighboring node is a downstream neighboring node of the node device on the working path; and if the second determination result is that the node device is a protection forward-shared node, the node device allocates the first label and the first interface, where the first label is the same as a forwarding label from the node device to a third downstream neighboring node, the first interface is the same as an outbound interface from the node device to the third downstream neighboring node, and the third downstream neighboring node is a downstream neighboring node of the node device on the protection path.

Further, the establishment request message may further include shared resource indication information, where the shared resource indication information is used to indicate that the restoration path shares a bandwidth resource with the working path and the protection path.

Further, the node device may further include:
a first searching unit 370, configured to obtain the route information of the restoration path by searching according to fault information of the working path.

### Embodiment 4

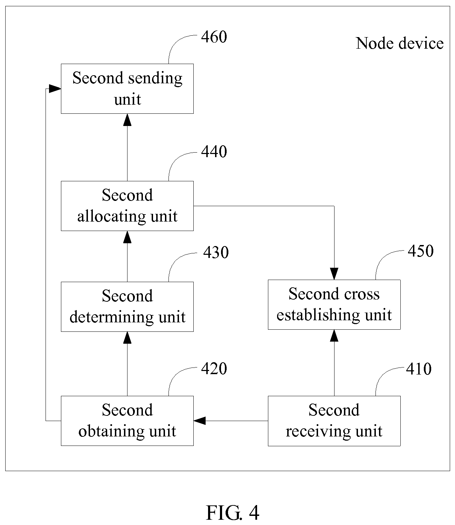

An embodiment of the present invention provides a node device, and as shown in FIG. 4, the node device includes:
a second receiving unit 410, configured to receive an establishment request message of a restoration path of a service, where the establishment request message includes at least a second label, a second interface, and route information of the restoration path, the second label is a forwarding label from a first upstream neighboring node to the node device, the second interface is an outbound interface from the first upstream neighboring node to the node device, and the first upstream neighboring node is an upstream neighboring node of the node device on the restoration path;
a second obtaining unit 420, configured to obtain, according to the route information of the restoration path and route information of a working path of the service, a working reverse-shared node set of the restoration path, where a working reverse-shared node in the working reverse-shared node set has a same upstream neighboring node on the restoration path and the working path;
a second determining unit 430, configured to determine whether the node device is a working reverse-shared node according to the working reverse-shared node set, and obtain a third determination result;
a second allocating unit 440, configured to allocate a third label and a third interface according to a condition, where the condition includes the third determination result, the third label is a forwarding label from the node device to the first upstream neighboring node, and the third interface is an outbound interface from the node device to the first upstream neighboring node;
a second cross establishing unit 450, configured to establish a cross-connection of the restoration path according to the second label, the second interface, the third label, and the third interface; and
a second sending unit 460, configured to: after the third label and the third interface are allocated, send an establishment response message of the restoration path to the first upstream neighboring node, where the establishment response message includes at least the third label, the third interface, the route information of the restoration path, and working reverse-shared node information, and the working reverse-shared node information is a node set obtained by removing the node device from the working reverse-shared node set.

Further, the second allocating unit 440 may specifically include:
if the third determination result is that the node device is a working reverse-shared node, the node device allocates the third label and the third interface, where the third label is the same as a forwarding label from the node device to a second upstream neighboring node, the third interface is the same as an outbound interface from the node device to the second upstream neighboring node, and the second upstream neighboring node is an upstream neighboring node of the node device on the working path.

Further, the node device may further include:
the establishment request message further includes shared resource indication information, and before the working reverse-shared node set is obtained, the second determining unit 430 is further configured to determine, according to the shared resource indication information, that the restoration path shares a bandwidth resource with the working path.

### Embodiment 5

An embodiment of the present invention provides a node device, and as shown in FIG. 4, the node device includes:
a second receiving unit 410, configured to receive an establishment request message of a restoration path of a service, where the establishment request message includes at least a second label, a second interface, and route information of the restoration path, the second label is a forwarding label from a first upstream neighboring node to the node device, the second interface is an outbound interface from the first upstream neighboring node to the node device, and the first upstream neighboring node is an upstream neighboring node of the node device on the restoration path;
a second obtaining unit 420, configured to obtain, according to the route information of the restoration path and route information of a working path of the service, a working reverse-shared node set of the restoration path, where a working reverse-shared node in the working reverse-shared node set has a same upstream neighboring node on the restoration path and the working path; and configured to obtain, according to the route information of the restoration path and route information of a protection path of the service, a protection reverse-shared node set of the restoration path, where a protection reverse-shared node in the protection reverse-shared node set has a same upstream neighboring node on the restoration path and the protection path;
a second determining unit 430, configured to determine whether the node device is a working reverse-shared node according to the working reverse-shared node set, and obtain a third determination result; and configured to determine whether the node device is a protection reverse-shared node according to the protection reverse-shared node set, and obtain a fourth determination result;
a second allocating unit 440, configured to allocate a third label and a third interface according to a condition, where the condition includes the third determination result and the fourth determination result, the third label is a forwarding label from the node device to the first upstream neighboring node, and the third interface is an outbound interface from the node device to the first upstream neighboring node;
a second cross establishing unit 450, configured to establish a cross-connection of the restoration path according to the second label, the second interface, the third label, and the third interface; and
a second sending unit 460, configured to: after the third label and the third interface are allocated, send an establishment response message of the restoration path to the first upstream neighboring node, where the establishment response message includes at least the third label, the third interface, the route information of the restoration path, working reverse-shared node information, and protection reverse-shared node information, the working reverse-shared node information is a node set obtained by removing the node device from the working reverse-shared node set, and the protection reverse-shared node information is a node set obtained by removing the node device from the protection reverse-shared node set.

Further, the second allocating unit 440 may specifically include:
if the third determination result is that the node device is a working reverse-shared node, the node device allocates the third label and the third interface, where the third label is the same as a forwarding label from the node device to a second upstream neighboring node, the third interface is the same as an outbound interface from the node device to the second upstream neighboring node, and the second upstream neighboring node is an upstream neighboring node of the node device on the working path; and if the fourth determination result is that the node device is a protection reverse-shared node, the node device allocates the third label and the third interface, where the third label is the same as a forwarding label from the node device to a third upstream neighboring node, the third interface is the same as an outbound interface from the node device to the third upstream neighboring node, and the third upstream neighboring node is an upstream neighboring node of the node device on the protection path.

Further, the node device may further include:
the establishment request message further includes shared resource indication information, and before the protection reverse-shared node set is obtained, the second determining unit 430 may be further configured to determine, according to the shared resource indication information, that the restoration path shares a bandwidth resource with the working path and the protection path.

### Embodiment 6

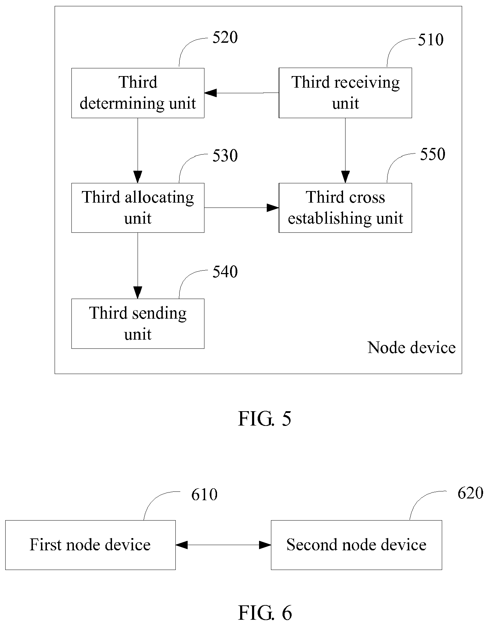

An embodiment of the present invention provides a node device, and as shown in FIG. 5, the node device includes:
a third receiving unit 510, configured to receive a first establishment request message of a restoration path of a service, where the first establishment request message includes at least a fifth label, a fifth interface, route information of the restoration path, and first working forward-shared node information of the restoration path, the fifth label is a forwarding label from a fourth upstream neighboring node to the node device, the fifth interface is an outbound interface from the fourth upstream neighboring node to the node device, the fourth upstream neighboring node is an upstream neighboring node of the node device on the restoration path, and a working forward-shared node in the first working forward-shared node information has a same downstream neighboring node on the restoration path and the working path; and configured to receive a first establishment response message of the restoration path, where the first establishment response message includes at least a seventh label, a seventh interface, the route information of the restoration path, and first working reverse-shared node information of the restoration path, the seventh label is a forwarding label from a fourth downstream neighboring node to the node device, the seventh interface is an outbound interface from the fourth downstream neighboring node to the node device, and a working reverse-shared node in the first working reverse-shared node information has a same upstream neighboring node on the restoration path and the working path;
a third determining unit 520, configured to determine whether the node device is a working forward-shared node according to the first working forward-shared node information, and obtain a fifth determination result; and configured to determine whether the node device is a working reverse-shared node according to the first working reverse-shared node information, and obtain a sixth determination result;
a third allocating unit 530, configured to allocate a sixth label and a sixth interface according to a first condition, where the first condition includes the fifth determination result, the sixth label is a forwarding label from the node device to the fourth downstream neighboring node, the sixth interface is an outbound interface from the node device to the fourth downstream neighboring node, and the fourth downstream neighboring node is a downstream neighboring node of the node device on the restoration path; and configured to allocate an eighth label and an eighth interface according to a second condition, where the second condition includes the sixth determination result, the eighth label is a forwarding label from the node device to the fourth upstream neighboring node, and the eighth interface is an outbound interface from the node device to the fourth upstream neighboring node;
a third sending unit 540, configured to send a second establishment request message of the restoration path to the fourth downstream neighboring node, where the second establishment request message includes at least the sixth label, the sixth interface, and the route information and second working forward-shared node information of the restoration path, and the second working forward-shared node information is a node set obtained by removing the node device from the first working forward-shared node information; and configured to: after the eighth label and the eighth interface are allocated, send a second establishment response message of the restoration path to the fourth upstream neighboring node, where the second establishment response message includes at least the eighth label, the eighth interface, the route information of the restoration path, and second working reverse-shared node information, and the second working reverse-shared node information is a node set obtained by removing the node device from the first working reverse-shared node information; and
a third cross establishing unit 550, configured to establish a cross-connection of the restoration path according to the fifth label, the fifth interface, the sixth label, the sixth interface, the seventh label, the seventh interface, the eighth label, and the eighth interface.

Further, the third allocating unit 530 may specifically include:
if the fifth determination result is that the node device is a working forward-shared node, the node device allocates the sixth label and the sixth interface, where the sixth label is the same as a forwarding label from the node device to a fifth downstream neighboring node, the sixth interface is the same as an outbound interface from the node device to the fifth downstream neighboring node, and the fifth downstream neighboring node is a downstream neighboring node of the node device on the working path; and if the sixth determination result is that the node device is a working reverse-shared node, the node device allocates the eighth label and the eighth interface, where the eighth label is the same as a forwarding label from the node device to a fifth upstream neighboring node, the eighth interface is the same as an outbound interface from the node device to the fifth upstream neighboring node, and the fifth upstream neighboring node is an upstream neighboring node of the node device on the working path.

Further, the node device may further include:
the first establishment request message further includes shared resource indication information, and the second establishment request message further includes shared resource indication information; and
the third determining unit 520 may be further configured to: before determining whether the node device is a working forward-shared node, determine, according to the shared resource indication information, that the restoration path shares a bandwidth resource with the working path.

### Embodiment 7:

An embodiment of the present invention provides a node device, and as shown in FIG. 5, the node device includes:
a third receiving unit 510, configured to receive a first establishment request message of a restoration path of a service, where the first establishment request message includes at least a fifth label, a fifth interface, route information of the restoration path, and first working forward-shared node information and first protection forward-shared node information of the restoration path, the fifth label is a forwarding label from a fourth upstream neighboring node to the node device, the fifth interface is an outbound interface from the fourth upstream neighboring node to the node device, the fourth upstream neighboring node is an upstream neighboring node of the node device on the restoration path, a working forward-shared node in the first working forward-shared node information has a same downstream neighboring node on the restoration path and the working path, and a protection forward-shared node in the first protection forward-shared node information has a same downstream neighboring node on the restoration path and the working path; and configured to receive a first establishment response message of the restoration path, where the first establishment response message includes at least a seventh label, a seventh interface, the route information of the restoration path, and first working reverse-shared node information and first protection reverse-shared node information of the restoration path, the seventh label is a forwarding label from a fourth downstream neighboring node to the node device, the seventh interface is an outbound interface from the fourth downstream neighboring node to the node device, a working reverse-shared node in the first working reverse-shared node information has a same upstream neighboring node on the restoration path and the working path, and a protection reverse-shared node in the first protection reverse-shared node information has a same upstream neighboring node on the restoration path and the working path;
a third determining unit 520, configured to determine whether the node device is a working forward-shared node according to the first working forward-shared node information, and obtain a fifth determination result; configured to determine whether the node device is a working reverse-shared node according to the first working reverse-shared node information, and obtain a sixth determination result; configured to determine whether the node device is a protection forward-shared node according to the first protection forward-shared node information, and obtain a seventh determination result; and configured to determine whether the node device is a protection reverse-shared node according to the first protection reverse-shared node information, and obtain an eighth determination result;
a third allocating unit 530, configured to allocate a sixth label and a sixth interface according to a first condition, where the first condition includes the fifth determination result and the seventh determination result, the sixth label is a forwarding label from the node device to the fourth downstream neighboring node, the sixth interface is an outbound interface from the node device to the fourth downstream neighboring node, and the fourth downstream neighboring node is a downstream neighboring node of the node device on the restoration path; and configured to allocate an eighth label and an eighth interface according to a second condition, where the second condition includes the sixth determination result and the eighth determination result, the eighth label is a forwarding label from the node device to the fourth upstream neighboring node, and the eighth interface is an outbound interface from the node device to the fourth upstream neighboring node;
a third sending unit 540, configured to send a second establishment request message of the restoration path to the fourth downstream neighboring node, where the second establishment request message includes at least the sixth label, the sixth interface, the route information of the restoration path, second working forward-shared node information, and second protection forward-shared node information, the second working forward-shared node information is a node set obtained by removing the node device from the first working forward-shared node information, and the second protection forward-shared node information is a node set obtained by removing the node device from the first protection forward-shared node information; and configured to: after the eighth label and the eighth interface are allocated, send a second establishment response message of the restoration path to the fourth upstream neighboring node, where the second establishment response message includes at least the eighth label, the eighth interface, the route information of the restoration path, second working reverse-shared node information, and second protection reverse-shared node information, the second working reverse-shared node information is a node set obtained by removing the node device from the first working reverse-shared node information, and the second protection reverse-shared node information is a node set obtained by removing the node device from the first protection reverse-shared node information; and
a third cross establishing unit 550, configured to establish a cross-connection of the restoration path according to the fifth label, the fifth interface, the sixth label, the sixth interface, the seventh label, the seventh interface, the eighth label, and the eighth interface.

Further, the third allocating unit 530 may specifically include:
if the fifth determination result is that the node device is a working forward-shared node, the node device allocates the sixth label and the sixth interface, where the sixth label is the same as a forwarding label from the node device to a fifth downstream neighboring node, the sixth interface is the same as an outbound interface from the node device to the fifth downstream neighboring node, and the fifth downstream neighboring node is a downstream neighboring node of the node device on the working path; and if the seventh determination result is that the node device is a protection forward-shared node, the node device allocates the sixth label and the sixth interface, where the sixth label is the same as a forwarding label from the node device to a sixth downstream neighboring node, the sixth interface is the same as an outbound interface from the node device to the sixth downstream neighboring node, and the sixth downstream neighboring node is a downstream neighboring node of the node device on the protection path; and
if the sixth determination result is that the node device is a working reverse-shared node, the node device allocates the eighth label and the eighth interface, where the eighth label is the same as a forwarding label from the node device to a fifth upstream neighboring node, and the eighth interface is the same as an outbound interface from the node device to the fifth upstream neighboring node; and if the eighth determination result is that the node device is a protection reverse-shared node, the node device allocates the eighth label and the eighth interface, where the eighth label is the same as a forwarding label from the node device to a sixth upstream neighboring node, the eighth interface is the same as an outbound interface from the node device to the sixth upstream neighboring node, and the sixth upstream neighboring node is an upstream neighboring node of the node device on the protection path.

Further, the node device may further include:
the first establishment request message may further include shared resource indication information, and the second establishment request message may further include shared resource indication information; and
the third determining unit 520 may be further configured to: before determining whether the node device is a working forward-shared node, determine, according to the shared resource indication information, that the restoration path shares a bandwidth resource with the working path and the protection path.

Content such as information exchange and an execution process between units in the node device provided in embodiments 2 to 7 is based on a same idea as the method embodiments of the present invention. For specific content, reference may be made to the descriptions of the method embodiments of the present invention, and details are not described herein again.

According to the node device provided in the embodiment of the present invention, the node device allocates a label and an outbound interface according to whether the node device is a node that is on a restoration path and may share a bandwidth resource with a working path. Therefore, automatic establishment of the restoration path is implemented, a bandwidth resource of the restoration path is ensured, and a service can be restored in time and effectively after the working path encounters a fault, thereby improving network reliability. In addition, according to a technical solution provided in the embodiment of the present invention, a bandwidth resource on an existing working path can be further reused, which improves network resource utilization and reduces a networking cost.

### Embodiment 8

An embodiment of the present invention provides a system for establishing a restoration path, and as shown in FIG. 6, the system includes at least a first node device 610 and a second node device 620, where the first node device 610 is connected to the second node device 620.

The first node device 610 includes a first obtaining unit, a first determining unit, a first allocating unit, a first sending unit, a first receiving unit, and a first cross establishing unit. For specific content, reference may be made to the first obtaining unit 310, the first determining unit 320, the first allocating unit 330, the first sending unit 340, the first receiving unit 350, and the first cross establishing unit 360 in Embodiment 2, and details are not described herein again.

The second node device 620 includes a second receiving unit, a second obtaining unit, a second determining unit, a second allocating unit, a second cross establishing unit, and a second sending unit. For specific content, reference may be made to the second receiving unit 410, the second obtaining unit 420, the second determining unit 430, the second allocating unit 440, the second cross establishing unit 450, and the second sending unit 460 in Embodiment 4, and details are not described herein again.

A third node device 630 may further exist between the first node device 610 and the second node device 620 and is specifically:
the third node device 630 includes a third receiving unit, a third determining unit, a third allocating unit, a third sending unit, and a third cross establishing unit. For specific content, reference may be made to the third receiving unit 510, the third determining unit 520, the third allocating unit 530, the third sending unit 540, and the third cross establishing unit 550 in Embodiment 6, and details are not described herein again.

### Embodiment 9

An embodiment of the present invention provides a system for establishing a restoration path, and as shown in FIG. 6, the system includes at least a first node device 610 and a second node device 620, where the first node device 610 is connected to the second node device 620.

The first node device 610 includes a first obtaining unit, a first determining unit, a first allocating unit, a first sending unit, a first receiving unit, and a first cross establishing unit. For specific content, reference may be made to the first obtaining unit 310, the first determining unit 320, the first allocating unit 330, the first sending unit 340, the first receiving unit 350, and the first cross establishing unit 360 in Embodiment 3, and details are not described herein again.

The second node device 620 includes a second receiving unit, a second obtaining unit, a second determining unit, a second allocating unit, a second cross establishing unit, and a second sending unit. For specific content, reference may be made to the second receiving unit 410, the second obtaining unit 420, the second determining unit 430, the second allocating unit 440, the second cross establishing unit 450, and the second sending unit 460 in Embodiment 5, and details are not described herein again.

A third node device 630 may further exist between the first node device 610 and the second node device 620 and is specifically:
the third node device 630 includes a third receiving unit, a third determining unit, a third allocating unit, a third sending unit, and a third cross establishing unit. For specific content, reference may be made to the third receiving unit 510, the third determining unit 520, the third allocating unit 530, the third sending unit 540, and the third cross establishing unit 550 in Embodiment 7, and details are not described herein again.

According to the system for establishing a restoration path in Embodiment 8 and Embodiment 9, content such as a specific implementation process between units and information exchange between the units is based on a same invention idea as the method embodiments of the present invention; therefore, reference may be made to the method embodiments, and details are not described herein again.

The foregoing embodiments may be implemented by extending the GMPLS (Generalized Multiprotocol Label Switching, generalized multiprotocol label switching) RSVP-TE (Resource Reservation Protocol with TE, Resource Reservation Protocol-Traffic Engineering) protocol, where a Path message is used as an establishment request message and a Resv message is used as an establishment response message.

Working forward-shared node information, working reverse-shared node information, protection forward-shared node information, protection reverse-shared node information, and shared resource indication information may be borne by adding GMPLS RSVP-TE signaling or extending existing RSVP-TE signaling.

The working forward-shared node information and protection forward-shared node information may be carried by adding a new object in the Path message; the working reverse-shared node information and protection reverse-shared node information may be carried by adding a new object in the Resv message.

The shared resource indication information may be carried by using an LSP_REQUIRED_ATTRIBUTES object in an extended Path message. For example, one bit in the LSP_REQUIRED_ATTRIBUTES object is defined as shared resource indication information. If the bit is set to 1, it indicates that the restoration path shares a resource with a working path carried in an ASSOCIATION object. This manner is applicable to a case in which a restoration path shares a bandwidth resource with a working path. Alternatively, two bits in the LSP_REQUIRED_ATTRIBUTES object may be defined as shared resource indication information, where one bit is used to indicate whether the restoration path shares a resource with a working path carried in the ASSOCIATION object, and the other bit is used to indicate whether the restoration path shares a resource with a protection path carried in the ASSOCIATION object. This manner is applicable to a case in which a restoration path shares a bandwidth resource with a working path and a protection path.

According to the technical solutions provided in the embodiments of the present invention, automatic establishment of a restoration path can be implemented, a bandwidth resource of the restoration path can be ensured, and a service can be restored in time and effectively after a working path encounters a fault, which improves network reliability. In addition, according to the technical solutions provided in the embodiments of the present invention, a bandwidth resource on an existing working path can be further reused, which improves network resource utilization and reduces a networking cost.

A person of ordinary skill in the art may understand that all or a part of the steps of the method embodiments may be implemented by a computer program instructing relevant hardware. The program may be stored in a computer readable storage medium. When the program runs, the processes of the method embodiments are performed. The storage medium may be: a magnetic disk, an optical disc, a read-only memory (Read-Only Memory, ROM), a random access memory (Random Access Memory, RAM), or the like.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for establishing a restoration path, comprising:
• obtaining, by a first node according to route information of a restoration path of a service and route information of a working path of the service, a working forward-shared node set of the restoration path, wherein a working forward-shared node in the working forward-shared node set has a same downstream neighboring node on the restoration path and the working path (S101a);
• determining, by the first node, whether the first node is a working forward-shared node according to the working forward-shared node set, and obtaining a first determination result (S102a);
• allocating, by the first node, a first label and a first interface according to a condition, wherein the condition comprises the first determination result, the first label is a forwarding label from the first node to a first downstream neighboring node, the first interface is an outbound interface from the first node to the first downstream neighboring node, and the first downstream neighboring node is a downstream neighboring node of the first node on the restoration path (S 103a),
wherein the allocating, by the first node, the first label and the first interface according to the condition, wherein the condition comprises the first determination result, specifically comprises:
if the first determination result is that the first node is a working forward-shared node, allocating, by the first node, the first label to a forwarding label from the first node to a second downstream neighboring node and the first interface to an outbound interface from the first node to the second downstream neighboring node, the second downstream neighboring node is a downstream neighboring node of the first node on the working path;
if the first determination result is that the first node is not a working forward-shared node, randomly allocating, by the first node, the first label and the first interface;
• sending, by the first node, an establishment request message to the first downstream neighboring node, wherein the establishment request message comprises at least the first label, the first interface, the route information of the restoration path, and working forward-shared node information, and the working forward-shared node information is a node set obtained by removing the first node from the working forward-shared node set in case the first node is a working forward-shared node (S104a);
• receiving, by the first node, an establishment response message of the restoration path, wherein the establishment response message comprises at least a fourth label, a fourth interface, and the route information of the restoration path, the fourth label is a forwarding label from the first downstream neighboring node to the first node, and the fourth interface is an outbound interface from the first downstream neighboring node to the first node (S105a); and
• establishing, by the first node, a cross-connection of the restoration path according to the first label, the first interface, the fourth label, and the fourth interface (S106a).

2. The method according to claim 1, wherein the method further comprises:
obtaining, by the first node according to the route information of the restoration path and route information of a protection path of the service, a protection forward-shared node set of the restoration path, wherein a protection forward-shared node in the protection forward-shared node set has a same downstream neighboring node on the restoration path and the protection path;
determining, by the first node, whether the first node is a protection forward-shared node according to the protection forward-shared node set, and obtaining a second determination result; and
the condition further comprises the second determination result; and the establishment request message further comprises protection forward-shared node information, wherein the protection forward-shared node information is a node set obtained by removing the first node from the protection forward-shared node set.

3. The method according to claim 2, wherein the allocating, by the first node, a first label and a first interface according to a condition, wherein the condition comprises the first determination result and the second determination result, specifically comprises:
if the first determination result is that the first node is a working forward-shared node, allocating, by the first node, the first label and the first interface, wherein the first label is the same as a forwarding label from the first node to a second downstream neighboring node, the first interface is the same as an outbound interface from the first node to the second downstream neighboring node, and the second downstream neighboring node is a downstream neighboring node of the first node on the working path; and
if the second determination result is that the first node is a protection forward-shared node, allocating, by the first node, the first label and the first interface, wherein the first label is the same as a forwarding label from the first node to a third downstream neighboring node, the first interface is the same as an outbound interface from the first node to the third downstream neighboring node, and the third downstream neighboring node is a downstream neighboring node of the first node and on the protection path.

4. The method according to claim 1 further comprising:
• receiving, by a second node being the first downstream neighboring node of the first node, the establishment request message of the restoration path of the service, wherein the establishment request message comprises at least a second label being the first label, a second interface being the first interface, and route information of the restoration path, the second label is a forwarding label from a first upstream neighboring node, being the first node, to the second node, the second interface is an outbound interface from the first upstream neighboring node to the second node, and the first upstream neighboring node is an upstream neighboring node of the second node on the restoration path (S101b);
• obtaining, by the second node, according to the route information of the restoration path and route information of the working path of the service, a working reverse-shared node set of the restoration path, wherein a working reverse-shared node in the working reverse-shared node set has a same upstream neighboring node on the restoration path and the working path (S102b);
• determining, by the second node, whether the second node is a working reverse-shared node according to the working reverse-shared node set, and obtaining a third determination result (S103b);
• allocating, by the second node, a third label and a third interface according to a condition, wherein the condition comprises the third determination result, the third label is a forwarding label from the second node to the first upstream neighboring node, and the third interface is an outbound interface from the second node to the first upstream neighboring node (S104b),
wherein the allocating, by the second node, the third label and the third interface according to the condition, wherein the condition comprises the third determination result, specifically comprises:
if the third determination result is that the second node is a working reverse-shared node, allocating, by the second node, the third label to a forwarding label from the second node to a second upstream neighboring node and the third interface to an outbound interface from the second node to the second upstream neighboring node, and the second upstream neighboring node is an upstream neighboring node of the second node on the working path;
if the first determination result is that the second node is not a working reverse-shared node, randomly allocating, by the second node, the third label and the third interface;
• establishing, by the second node, a cross-connection of the restoration path according to the second label, the second interface, the third label, and the third interface (S105b); and
• sending, by the second node after allocating the third label and the third interface, an establishment response message of the restoration path to the first upstream neighboring node of the second node, wherein the establishment response message comprises at least the third label, the third interface, the route information of the restoration path, and working reverse-shared node information, and the working reverse-shared node information is a node set obtained by removing the second node from the working reverse-shared node set in case the second node is a working reverse-shared node (S106b).

5. The method according to claim 4, wherein the method further comprises:
obtaining, by the second node according to the route information of the restoration path and route information of a protection path of the service, a protection reverse-shared node set of the restoration path, wherein a protection reverse-shared node in the protection reverse-shared node set has a same upstream neighboring node on the restoration path and the protection path;
determining, by the second node, whether the second node is a protection reverse-shared node according to the protection reverse-shared node set, and obtaining a fourth determination result; and
the condition further comprises the fourth determination result; and the establishment response message further comprises protection reverse shared node information, wherein the protection reverse-shared node information is a node set obtained by removing the second node from the protection reverse-shared node set.

6. The method according to claim 5, wherein the allocating, by the second node, a third label and a third interface according to a condition, wherein the condition comprises the third determination result and the fourth determination result, specifically comprises:
if the third determination result is that the second node is a working reverse-shared node, allocating, by the second node, the third label and the third interface, wherein the third label is the same as a forwarding label from the second node to a second upstream neighboring node, the third interface is the same as an outbound interface from the second node to the second upstream neighboring node, and the second upstream neighboring node is an upstream neighboring node of the second node on the working path; and
if the fourth determination result is that the second node is a protection reverse-shared node, allocating, by the second node, the third label and the third interface, wherein the third label is the same as a forwarding label from the second node to a third upstream neighboring node, the third interface is the same as an outbound interface from the second node to the third upstream neighboring node, and the third upstream neighboring node is an upstream neighboring node of the second node on the protection path.

7. The method according to claim 4 further comprising:
• receiving, by a third node being the first downstream neighboring node of the second node, a first establishment request message of the restoration path of the service, wherein the first establishment request message comprises at least a fifth label, a fifth interface, route information of the restoration path, and first working forward-shared node information of the restoration path, the fifth label is a forwarding label from a fourth upstream neighboring node, being the second node, to the third node, the fifth interface is an outbound interface from the fourth upstream neighboring node to the third node, the fourth upstream neighboring node is an upstream neighboring node of the third node on the restoration path, and a working forward-shared node in the first working forward-shared node information has a same downstream neighboring node on the restoration path and the working path (S101c);
• determining, by the third node, whether the third node is a working forward-shared node according to the first working forward-shared node information, and obtaining a fifth determination result (S102c);
• allocating, by the third node, a sixth label and a sixth interface according to a first condition, wherein the first condition comprises the fifth determination result, the sixth label is a forwarding label from the third node to a fourth downstream neighboring node of the third node, the sixth interface is an outbound interface from the third node to the fourth downstream neighboring node, and the fourth downstream neighboring node is a downstream neighboring node of the third node on the restoration path (S103c) wherein the allocating, by the third node, the sixth label and the sixth interface according to the first condition, wherein the first condition comprises the fifth determination result, specifically comprises:
if the fifth determination result is that the third node is a working forward-shared node, allocating, by the third node, the sixth label to a forwarding label from the third node to a fifth downstream neighboring node and the sixth interface to the same as an outbound interface from the third node to the fifth downstream neighboring node, and the fifth downstream neighboring node is a downstream neighboring node of the third node on the working path;
if the fifth determination result is that the third node is not a working forward-shared node, randomly allocating the sixth label and the sixth interface;
• sending, by the third node, a second establishment request message of the restoration path to the fourth downstream neighboring node, wherein the second establishment request message comprises at least the sixth label, the sixth interface, the route information of the restoration path, and second working forward-shared node information of the restoration path, and the second working forward-shared node information is a node set obtained by removing the third node from the first working forward-shared node information in case the third node is a working forward-shared node (S104c);
• receiving, by the third node, a first establishment response message of the restoration path, wherein the first establishment response message comprises at least a seventh label, a seventh interface, the route information of the restoration path, and first working reverse-shared node information of the restoration path, the seventh label is a forwarding label from the fourth downstream neighboring node to the third node, the seventh interface is an outbound interface from the fourth downstream neighboring node to the third node, and a working reverse-shared node in the first working reverse-shared node information has a same upstream neighboring node on the restoration path and the working path (S105c);
• determining, by the third node, whether the third node is a working reverse-shared node according to the first working reverse-shared node information, and obtaining a sixth determination result (S106c);
• allocating, by the third node, an eighth label and an eighth interface according to a second condition, wherein the second condition comprises the sixth determination result, the eighth label is a forwarding label from the third node to the fourth upstream neighboring node, and the eighth interface is an outbound interface from the third node to the fourth upstream neighboring node (S107c),
wherein the allocating, by the third node, the eighth label and the eighth interface according to the second condition, wherein the second condition comprises the sixth determination result, specifically comprises:
if the sixth determination result is that the third node is a working reverse-shared node, allocating, by the third node, the eighth label to a forwarding label from the third node to a fifth upstream neighboring node and the eighth interface to the same as an outbound interface from the third node to the fifth upstream neighboring node, and the fifth upstream neighboring node is an upstream neighboring node of the third node on the working path;
if the sixth determination result is that the third node is not a working reverse-shared node, randomly allocating the eighth label and the eighth interface;
• establishing, by the third node, a cross-connection of the restoration path according to the fifth label, the fifth interface, the sixth label, the sixth interface, the seventh label, the seventh interface, the eighth label, and the eighth interface (S108c); and
• sending, by the third node after allocating the eighth label and the eighth interface, a second establishment response message of the restoration path to the fourth upstream neighboring node, wherein the second establishment response message comprises at least the eighth label, the eighth interface, the route information of the restoration path, and second working reverse-shared node information, and the second working reverse-shared node information is a node set obtained by removing the third node from the first working reverse-shared node information in case the third node is a working reverse-shared node (S109c).

8. A node device configured to perform any of the methods according to claims 1 - 4.

## Patentansprüche

1. Verfahren zu dem Herstellen eines Wiederherstellungspfads, das Folgendes umfasst:
• Erhalten, durch einen ersten Knoten gemäß Routeninformationen eines Wiederherstellungspfads eines Dienstes und Routeninformationen eines Arbeitspfads des Dienstes, eines Mitnutz-Arbeitsvorwärtsknotensatzes des Wiederherstellungspfads, wobei ein Mitnutz-Arbeitsvorwärtsknoten in dem Mitnutz-Arbeitsvorwärtsknotensatz einen gleichen Abwärts-Nachbarknoten auf dem Wiederherstellungspfad und dem Arbeitspfad aufweist (S101a);
• Bestimmen, durch den ersten Knoten, ob der erste Knoten ein Mitnutz-Arbeitsvorwärtsknoten gemäß dem Mitnutz-Arbeitsvorwärtsknotensatz ist, und Erhalten eines ersten Bestimmungsergebnisses (S102a);
• Zuweisen, durch den ersten Knoten, einer ersten Kennung und einer ersten Schnittstelle gemäß einer Bedingung, wobei die Bedingung das erste Bestimmungsergebnis umfasst, die erste Kennung eine Weiterleitungskennung von dem ersten Knoten zu einem ersten Abwärts-Nachbarknoten ist, die erste Schnittstelle eine Ausgangsschnittstelle von dem ersten Knoten zu dem ersten Abwärts-Nachbarknoten ist und der erste Abwärts-Nachbarknoten ein Abwärts-Nachbarknoten des ersten Knotens auf dem Wiederherstellungspfad ist (S103a),
wobei das Zuweisen, durch den ersten Knoten, der ersten Kennung und der ersten Schnittstelle gemäß der Bedingung, wobei die Bedingung das erste Bestimmungsergebnis umfasst, speziell Folgendes umfasst:
falls das erste Bestimmungsergebnis derart ist, dass der erste Knoten ein Mitnutz-Arbeitsvorwärtsknoten ist, Zuweisen, durch den ersten Knoten, der ersten Kennung zu einer Weiterleitungskennung von dem ersten Knoten zu einem zweiten Abwärts-Nachbarknoten und der ersten Schnittstelle zu einer Ausgangsschnittstelle von dem ersten Knoten zu dem zweiten Abwärts-Nachbarknoten, wobei der zweite Abwärts-Nachbarknoten ein Abwärts-Nachbarknoten des ersten Knotens auf dem Arbeitspfad ist;
falls das erste Bestimmungsergebnis derart ist, dass der erste Knoten kein Mitnutz-Arbeitsvorwärtsknoten ist, zufälliges Zuweisen, durch den ersten Knoten, der ersten Kennung und der ersten Schnittstelle;
• Senden, durch den ersten Knoten, einer Herstellungsanforderungsnachricht an den ersten Abwärts-Nachbarknoten, wobei die Herstellungsanforderungsnachricht mindestens die erste Kennung, die erste Schnittstelle, die Routeninformationen des Wiederherstellungspfads und Mitnutz-Arbeitsvorwärtsknoteninformationen umfasst und wobei die Mitnutz-Arbeitsvorwärtsknoteninformationen ein Knotensatz sind, der durch Entfernen des ersten Knotens aus dem Mitnutz-Arbeitsvorwärtsknotensatz erhalten wird, im Fall, dass der erste Knoten ein Mitnutz-Arbeitsvorwärtsknoten ist (S104a);
• Empfangen, durch den ersten Knoten, einer Herstellungsantwortnachricht des Wiederherstellungspfads, wobei die Herstellungsantwortnachricht mindestens eine vierte Kennung, eine vierte Schnittstelle und die Routeninformationen des Wiederherstellungspfads umfasst, wobei die vierte Kennung eine Weiterleitungskennung von dem ersten Abwärts-Nachbarknoten zu dem ersten Knoten ist und die vierte Schnittstelle eine Ausgangsschnittstelle von dem ersten Abwärts-Nachbarknoten zu dem ersten Knoten ist (S105a); und
• Herstellen, durch den ersten Knoten, einer Querverbindung des Wiederherstellungspfads gemäß der ersten Kennung, der ersten Schnittstelle, der vierten Kennung und der vierten Schnittstelle (S106a).

2. Verfahren nach Anspruch 1, wobei das Verfahren ferner Folgendes umfasst:
Erhalten, durch den ersten Knoten gemäß den Routeninformationen des Wiederherstellungspfads und Routeninformationen eines Schutzpfads des Dienstes, eines Mitnutz-Schutzvorwärtsknotensatzes des Wiederherstellungspfads, wobei ein Mitnutz-Schutzvorwärtsknoten in dem Mitnutz-Schutzvorwärtsknotensatz einen gleichen Abwärts-Nachbarknoten auf dem Wiederherstellungspfad und dem Schutzpfad aufweist;
Bestimmen, durch den ersten Knoten, ob der erste Knoten ein Mitnutz-Schutzvorwärtsknoten gemäß dem Mitnutz-Schutzvorwärtsknotensatz ist und Erhalten eines zweiten Bestimmungsergebnisses; und
wobei die Bedingung ferner das zweite Bestimmungsergebnis umfasst; und die Herstellungsanforderungsnachricht ferner Mitnutz-Schutzvorwärtsknoteninformationen umfasst, wobei die Mitnutz-Schutzvorwärtsknoteninformationen ein Knotensatz sind, der durch Entfernen des ersten Knotens aus dem Mitnutz-Schutzvorwärtsknotensatz erhalten wird.

3. Verfahren nach Anspruch 2, wobei das Zuweisen, durch den ersten Knoten, einer ersten Kennung und einer ersten Schnittstelle gemäß einer Bedingung, wobei die Bedingung das erste Bestimmungsergebnis und das zweite Bestimmungsergebnis umfasst, speziell Folgendes umfasst:
falls das erste Bestimmungsergebnis derart ist, dass der erste Knoten ein Mitnutz-Arbeitsvorwärtsknoten ist, Zuweisen, durch den ersten Knoten, der ersten Kennung und der ersten Schnittstelle, wobei die erste Kennung dieselbe wie eine Weiterleitungskennung von dem ersten Knoten zu einem zweiten Abwärts-Nachbarknoten ist, die erste Schnittstelle dieselbe wie eine Ausgangsschnittstelle von dem ersten Knoten zu dem zweiten Abwärts-Nachbarknoten ist und der zweite Abwärts-Nachbarknoten ein Abwärts-Nachbarknoten des ersten Knotens auf dem Arbeitspfad ist; und
falls das zweite Bestimmungsergebnis derart ist, dass der erste Knoten ein Mitnutz-Schutzvorwärtsknoten ist, Zuweisen, durch den ersten Knoten, der ersten Kennung und der ersten Schnittstelle, wobei die erste Kennung dieselbe ist wie eine Weiterleitungskennung von dem ersten Knoten zu einem dritten Abwärts-Nachbarknoten, die erste Schnittstelle dieselbe ist wie eine Ausgangsschnittstelle von dem ersten Knoten zu dem dritten Abwärts-Nachbarknoten, und der dritte Abwärts-Nachbarknoten ein Abwärts-Nachbarknoten des ersten Knotens und auf dem Schutzpfad ist.

4. Verfahren nach Anspruch 1, das ferner Folgendes umfasst:
• Empfangen, durch einen zweiten Knoten, der der erste Abwärts-Nachbarknoten des ersten Knotens ist, der Herstellungsanforderungsnachricht des Wiederherstellungspfads des Dienstes, wobei die Herstellungsanforderungsnachricht mindestens eine zweite Kennung, die die erste Kennung ist, eine zweite Schnittstelle, die die erste Schnittstelle ist, und Routeninformationen des Wiederherstellungspfads umfasst, wobei die zweite Kennung eine Weiterleitungskennung von einem ersten Aufwärts-Nachbarknoten, der der erste Knoten ist, zu dem zweiten Knoten ist, die zweite Schnittstelle eine Ausgangsschnittstelle von dem ersten Aufwärts-Nachbarknoten zu dem zweiten Knoten ist und der erste Aufwärts-Nachbarknoten ein Aufwärts-Nachbarknoten des zweiten Knotens auf dem Wiederherstellungspfad ist (S101b);
• Erhalten, durch den zweiten Knoten, gemäß den Routeninformationen des Wiederherstellungspfads und den Routeninformationen des Arbeitspfads des Dienstes, eines Mitnutz-Arbeitsrückwärtsknotensatzes des Wiederherstellungspfads, wobei ein Mitnutz-Arbeitsrückwärtsknoten in dem Mitnutz-Arbeitsrückwärtsknotensatz einen selben Aufwärts-Nachbarknoten auf dem Wiederherstellungspfad und dem Arbeitspfad aufweist (S102b);
• Bestimmen, durch den zweiten Knoten, ob der zweite Knoten ein Mitnutz-Arbeitsrückwärtsknoten gemäß dem Mitnutz-Arbeitsrückwärtsknotensatz ist, und Erhalten eines dritten Bestimmungsergebnisses (S 1 03b);
• Zuweisen, durch den zweiten Knoten, einer dritten Kennung und einer dritten Schnittstelle gemäß einer Bedingung, wobei die Bedingung das dritte Bestimmungsergebnis umfasst, die dritte Kennung eine Weiterleitungskennung von dem zweiten Knoten zu dem ersten Aufwärts-Nachbarknoten ist und die dritte Schnittstelle eine Ausgangsschnittstelle von dem zweiten Knoten zu dem ersten Aufwärts-Nachbarknoten ist (S104b),
wobei das Zuweisen, durch den zweiten Knoten, der dritten Kennung und der dritten Schnittstelle gemäß der Bedingung, wobei die Bedingung das dritte Bestimmungsergebnis umfasst, speziell Folgendes umfasst:
falls das dritte Bestimmungsergebnis derart ist, dass der zweite Knoten ein Mitnutz-Arbeitsrückwärtsknoten ist, Zuweisen, durch den zweiten Knoten, der dritten Kennung zu einer Weiterleitungskennung von dem zweiten Knoten zu einem zweiten Aufwärts-Nachbarknoten und der dritten Schnittstelle zu einer Ausgangsschnittstelle von dem zweiten Knoten zu dem zweiten Aufwärts-Nachbarknoten, und wobei der zweite Aufwärts-Nachbarknoten ein Aufwärts-Nachbarknoten des zweiten Knotens auf dem Arbeitspfad ist;
falls das erste Bestimmungsergebnis derart ist, dass der zweite Knoten kein Mitnutz-Arbeitsrückwärtsknoten ist, zufälliges Zuweisen, durch den zweiten Knoten, der dritten Kennung und der dritten Schnittstelle;
• Herstellen, durch den zweiten Knoten, einer Querverbindung des Wiederherstellungspfads gemäß der zweiten Kennung, der zweiten Schnittstelle, der dritten Kennung und der dritten Schnittstelle (S105b); und
• Senden, durch den zweiten Knoten, nach dem Zuweisen der dritten Kennung und der dritten Schnittstelle, einer Herstellungsantwortnachricht des Wiederherstellungspfads an den ersten Aufwärts-Nachbarknoten des zweiten Knotens, wobei die Herstellungsantwortnachricht mindestens die dritte Kennung, die dritte Schnittstelle, die Routeninformationen des Wiederherstellungspfads und Mitnutz-Arbeitsrückwärtsknoteninformationen umfasst, und wobei die Mitnutz-Arbeitsrückwärtsknoteninformationen ein Knotensatz sind, der durch Entfernen des zweiten Knotens aus dem Mitnutz-Arbeitsrückwärtsknotensatz erhalten wird, im Fall, dass der zweite Knoten ein Mitnutz-Arbeitsrückwärtsknoten ist (S 1 06b).

5. Verfahren nach Anspruch 4, wobei das Verfahren ferner Folgendes umfasst:
Erhalten, durch den zweiten Knoten gemäß den Routeninformationen des Wiederherstellungspfads und Routeninformationen eines Schutzpfads des Dienstes, eines Mitnutz-Schutzrückwärtsknotensatzes des Wiederherstellungspfads, wobei ein Mitnutz-Schutzrückwärtsknoten in dem Mitnutz-Schutzrückwärtsknotensatz einen gleichen Aufwärts-Nachbarknoten auf dem Wiederherstellungspfad und dem Schutzpfad aufweist;
Bestimmen, durch den zweiten Knoten, ob der zweite Knoten ein Mitnutz-Schutzrückwärtsknoten gemäß dem Mitnutz-Schutzrückwärtsknotensatz ist, und Erhalten eines vierten Bestimmungsergebnisses; und
wobei die Bedingung ferner das vierte Bestimmungsergebnis umfasst; und die Herstellungsantwortnachricht ferner Mitnutz-Schutzrückwärtsknoteninformationen umfasst, wobei die Mitnutz-Schutzrückwärtsknoteninformationen ein Knotensatz sind, der durch Entfernen des zweiten Knotens aus dem Mitnutz-Schutzrückwärtsknotensatz erhalten wird.

6. Verfahren nach Anspruch 5, wobei das Zuweisen, durch den zweiten Knoten, einer dritten Kennung und einer dritten Schnittstelle gemäß einer Bedingung, wobei die Bedingung das dritte Bestimmungsergebnis und das vierte Bestimmungsergebnis umfasst, speziell Folgendes umfasst:
falls das dritte Bestimmungsergebnis derart ist, dass der zweite Knoten ein Mitnutz-Arbeitsrückwärtsknoten ist, Zuweisen, durch den zweiten Knoten, der dritten Kennung und der dritten Schnittstelle, wobei die dritte Kennung dieselbe wie eine Weiterleitungskennung von dem zweiten Knoten zu einem zweiten Aufwärts-Nachbarknoten ist, die dritte Schnittstelle dieselbe wie eine Ausgangsschnittstelle von dem zweiten Knoten zu dem zweiten Aufwärts-Nachbarknoten ist und der zweite Aufwärts-Nachbarknoten ein Aufwärts-Nachbarknoten des zweiten Knotens auf dem Arbeitspfad ist; und
falls das vierte Bestimmungsergebnis derart ist, dass der zweite Knoten ein Mitnutz-Schutzrückwärtsknoten ist, Zuweisen, durch den zweiten Knoten, der dritten Kennung und der dritten Schnittstelle, wobei die dritte Kennung dieselbe ist wie eine Weiterleitungskennung von dem zweiten Knoten zu einem dritten Aufwärts-Nachbarknoten, die dritte Schnittstelle dieselbe ist wie eine Ausgangsschnittstelle von dem zweiten Knoten zu dem dritten Aufwärts-Nachbarknoten, und der dritte Aufwärts-Nachbarknoten ein Aufwärts-Nachbarknoten des zweiten Knotens auf dem Schutzpfad ist.

7. Verfahren nach Anspruch 4, das ferner Folgendes umfasst:
• Empfangen, durch einen dritten Knoten, der der erste Abwärts-Nachbarknoten des zweiten Knotens ist, einer ersten Herstellungsanforderungsnachricht des Wiederherstellungspfads des Dienstes, wobei die erste Herstellungsanforderungsnachricht mindestens eine fünfte Kennung, eine fünfte Schnittstelle, Routeninformationen des Wiederherstellungspfads und erste Mitnutz-Arbeitsvorwärtsknoteninformationen des Wiederherstellungspfads umfasst, wobei die fünfte Kennung eine Weiterleitungskennung von einem vierten Aufwärts-Nachbarknoten, der der zweite Knoten ist, zu dem dritten Knoten ist, die fünften Schnittstelle eine Ausgangsschnittstelle von dem vierten Aufwärts-Nachbarknoten zu dem dritten Knoten ist, der vierte Aufwärts-Nachbarknoten ein Aufwärts-Nachbarknoten des dritten Knotens auf dem Wiederherstellungspfad ist und ein Mitnutz-Arbeitsvorwärtsknoten in den ersten Mitnutz-Arbeitsvorwärtsknoteninformationen einen gleichen Abwärts-Nachbarknoten auf dem Wiederherstellungspfad und dem Arbeitspfad aufweist (S101c);
• Bestimmen, durch den dritten Knoten, ob der dritte Knoten ein Mitnutz-Arbeitsvorwärtsknoten gemäß den ersten Mitnutz-Arbeitsvorwärtsknoteninformationen ist, und Erhalten eines fünften Bestimmungsergebnisses (S102c);
• Zuweisen, durch den dritten Knoten, einer sechsten Kennung und einer sechsten Schnittstelle gemäß einer ersten Bedingung, wobei die erste Bedingung das fünfte Bestimmungsergebnis umfasst, die sechste Kennung eine Weiterleitungskennung von dem dritten Knoten zu einem vierten Abwärts-Nachbarknoten des dritten Knotens ist, die sechste Schnittstelle eine Ausgangsschnittstelle von dem dritten Knoten zu dem vierten Abwärts-Nachbarknoten ist und der vierte Abwärts-Nachbarknoten ein Abwärts-Nachbarknoten des dritten Knotens auf dem Wiederherstellungspfad ist (S103c),
wobei das Zuweisen, durch den dritten Knoten, der sechsten Kennung und der sechsten Schnittstelle gemäß der ersten Bedingung, wobei die erste Bedingung das fünfte Bestimmungsergebnis umfasst, speziell Folgendes umfasst:
falls das fünfte Bestimmungsergebnis derart ist, dass der dritte Knoten ein Mitnutz-Arbeitsvorwärtsknoten ist, Zuweisen, durch den dritten Knoten, der sechsten Kennung zu einer Weiterleitungskennung von dem dritten Knoten zu einem fünften Abwärts-Nachbarknoten und der sechsten Schnittstelle zu derselben wie einer Ausgangsschnittstelle von dem dritten Knoten zu dem fünften Abwärts-Nachbarknoten, und wobei der fünfte Abwärts-Nachbarknoten ein Abwärts-Nachbarknoten des dritten Knotens auf dem Arbeitspfad ist;
falls das fünfte Bestimmungsergebnis derart ist, dass der dritte Knoten kein Mitnutz-Arbeitsvorwärtsknoten ist, zufälliges Zuweisen der sechsten Kennung und der sechsten Schnittstelle;
• Senden, durch den dritten Knoten, einer zweiten Herstellungsanforderungsnachricht des Wiederherstellungspfads an den vierten Abwärts-Nachbarknoten, wobei die zweite Herstellungsanforderungsnachricht mindestens die sechste Kennung, die sechste Schnittstelle, die Routeninformationen des Wiederherstellungspfads und zweite Mitnutz-Arbeitsvorwärtsknoteninformationen des Wiederherstellungspfads umfasst, und wobei die zweiten Mitnutz-Arbeitsvorwärtsknoteninformationen ein Knotensatz sind, der durch Entfernen des dritten Knotens aus den ersten Mitnutz-Arbeitsvorwärtsknoteninformationen erhalten wird, im Fall, dass der dritte Knoten ein Mitnutz-Arbeitsvorwärtsknoten ist (S104c);
• Empfangen, durch den dritten Knoten, einer ersten Herstellungsantwortnachricht des Wiederherstellungspfads, wobei die erste Herstellungsantwortnachricht mindestens eine siebte Kennung, eine siebte Schnittstelle, die Routeninformationen des Wiederherstellungspfads und erste Mitnutz-Arbeitsrückwärtsknoteninformationen des Wiederherstellungspfads umfasst, wobei die siebte Kennung eine Weiterleitungskennung von dem vierten Abwärts-Nachbarknoten zu dem dritten Knoten ist, die siebte Schnittstelle eine Ausgangsschnittstelle von dem vierten Abwärts-Nachbarknoten zu dem dritten Knoten ist und ein Mitnutz-Arbeitsrückwärtsknoten in den ersten Mitnutz-Arbeitsrückwärtsknoteninformationen einen gleichen Aufwärts-Nachbarknoten auf dem Wiederherstellungspfad und dem Arbeitspfad aufweist (S105c);
• Bestimmen, durch den dritten Knoten, ob der dritte Knoten ein Mitnutz-Arbeitsrückwärtsknoten gemäß den ersten Mitnutz-Arbeitsrückwärtsknoteninformationen ist, und Erhalten eines sechsten Bestimmungsergebnisses (S106c);
• Zuweisen, durch den dritten Knoten, einer achten Kennung und einer achten Schnittstelle gemäß einer zweiten Bedingung, wobei die zweite Bedingung das sechste Bestimmungsergebnis umfasst, die achte Kennung eine Weiterleitungskennung von dem dritten Knoten zu dem vierten Aufwärts-Nachbarknoten ist und die achte Schnittstelle eine Ausgangsschnittstelle von dem dritten Knoten zu dem vierten Aufwärts-Nachbarknoten ist (S107c),
wobei das Zuweisen, durch den dritten Knoten, der achten Kennung und der achten Schnittstelle gemäß der zweiten Bedingung, wobei die zweite Bedingung das sechste Bestimmungsergebnis umfasst, speziell Folgendes umfasst:
falls das sechste Bestimmungsergebnis derart ist, dass der dritte Knoten ein Mitnutz-Arbeitsrückwärtsknoten ist, Zuweisen, durch den dritten Knoten, der achten Kennung zu einer Weiterleitungskennung von dem dritten Knoten zu einem fünften Aufwärts-Nachbarknoten und der achten Schnittstelle zu derselben wie einer Ausgangsschnittstelle von dem dritten Knoten zu dem fünften Aufwärts-Nachbarknoten, und wobei der fünfte Aufwärts-Nachbarknoten ein Aufwärts-Nachbarknoten des dritten Knotens auf dem Arbeitspfad ist;
falls das sechste Bestimmungsergebnis derart ist, dass der dritte Knoten kein Mitnutz-Arbeitsrückwärtsknoten ist, zufälliges Zuweisen der achten Kennung und der achten Schnittstelle;
• Herstellen, durch den dritten Knoten, einer Querverbindung des Wiederherstellungspfads gemäß der fünften Kennung, der fünften Schnittstelle, der sechsten Kennung, der sechsten Schnittstelle, der siebten Kennung, der siebten Schnittstelle, der achten Kennung und der achten Schnittstelle (S108c); und
• Senden, durch den dritten Knoten, nach dem Zuweisen der achten Kennung und der achten Schnittstelle, einer zweiten Herstellungsantwortnachricht des Wiederherstellungspfads an den vierten Aufwärts-Nachbarknoten, wobei die zweite Herstellungsantwortnachricht mindestens die achte Kennung, die achte Schnittstelle, die Routeninformationen des Wiederherstellungspfads und zweite Mitnutz-Arbeitsrückwärtsknoteninformationen umfasst, und wobei die zweiten Mitnutz-Arbeitsrückwärtsknoteninformationen ein Knotensatz sind, der durch Entfernen des dritten Knotens aus den ersten Mitnutz-Arbeitsrückwärtsknoteninformationen erhalten wird, im Fall, dass der dritte Knoten ein Mitnutz-Arbeitsrückwärtsknoten ist (S109c).

8. Knotenvorrichtung, die ausgelegt ist zu dem Durchführen eines der Verfahren nach den Ansprüchen 1- 4.

## Revendications

1. Procédé permettant d'établir un chemin de restauration, comprenant les étapes suivantes :
. obtenir, par un premier noeud selon des informations de route d'un chemin de restauration d'un service et des informations de route d'un chemin de travail du service, un ensemble de noeuds partagés avant de travail du chemin de restauration, un noeud partagé avant de travail dans l'ensemble de noeuds partagés avant de travail ayant un même noeud voisin aval sur le chemin de restauration et sur le chemin de travail (S101a) ;
. déterminer, par le premier noeud, si le premier noeud est un noeud partagé avant de travail selon l'ensemble de noeuds partagés avant de travail, et obtenir un premier résultat de détermination (S102a) ;
. attribuer, par le premier noeud, une première étiquette et une première interface selon une condition, la condition comportant le premier résultat de détermination, la première étiquette étant une étiquette de réacheminement depuis le premier noeud jusqu'à un premier noeud voisin aval, la première interface étant une interface de sortie depuis le premier noeud jusqu'au premier noeud voisin aval, et le premier noeud voisin aval étant un noeud voisin aval du premier noeud sur le chemin de restauration (S103a),
l'étape consistant à attribuer, par le premier noeud, la première étiquette et la première interface selon la condition, la condition comportant le premier résultat de détermination, comprenant spécifiquement :
si le premier résultat de détermination est que le premier noeud est un noeud partagé avant de travail, attribuer, par le premier noeud, la première étiquette à une étiquette de réacheminement depuis le premier noeud jusqu'à un deuxième noeud voisin aval et la première interface à une interface de sortie depuis le premier noeud jusqu'au deuxième noeud voisin aval, le deuxième noeud voisin aval étant un noeud voisin aval du premier noeud sur le chemin de travail ;
si le premier résultat de détermination est que le premier noeud n'est pas un noeud partagé avant de travail, attribuer aléatoirement, par le premier noeud, la première étiquette et la première interface ;
. envoyer, par le premier noeud, un message de requête d'établissement au premier noeud voisin aval, le message de requête d'établissement comportant au moins la première étiquette, la première interface, les informations de route du chemin de restauration, et des informations de noeud partagé avant de travail, et les informations de noeud partagé avant de travail étant un ensemble de noeuds obtenu en supprimant le premier noeud de l'ensemble de noeuds partagés avant de travail dans le cas où le premier noeud est un noeud partagé avant de travail (S104a);
. recevoir, par le premier noeud, un message de réponse d'établissement du chemin de restauration, le message de réponse d'établissement comportant au moins une quatrième étiquette, une quatrième interface, et les informations de route du chemin de restauration, la quatrième étiquette étant une étiquette de réacheminement depuis le premier noeud voisin aval jusqu'au premier noeud, et la quatrième interface étant une interface de sortie depuis le premier noeud voisin aval jusqu'au premier noeud (S105a) ; et
. établir, par le premier noeud, une connexion croisée du chemin de restauration selon la première étiquette, la première interface, la quatrième étiquette, et la quatrième interface (S106a).

2. Procédé selon la revendication 1, dans lequel le procédé comprend en outre :
obtenir, par le premier noeud selon les informations de route du chemin de restauration et des informations de route d'un chemin de protection du service, un ensemble de noeuds partagés avant de protection du chemin de restauration, un noeud partagé avant de protection dans l'ensemble de noeuds partagés avant de protection ayant un même noeud voisin aval sur le chemin de restauration et sur le chemin de protection ;
déterminer, par le premier noeud, si le premier noeud est un noeud partagé avant de protection selon l'ensemble de noeuds partagés avant de protection, et obtenir un deuxième résultat de détermination ; et
la condition comprend en outre le deuxième résultat de détermination ; et le message de requête d'établissement comprend en outre des informations de noeud partagé avant de protection, les informations de noeud partagé avant de protection étant un ensemble de noeuds obtenu en supprimant le premier noeud de l'ensemble de noeuds partagés avant de protection.

3. Procédé selon la revendication 2, dans lequel l'étape consistant à attribuer, par le premier noeud, une première étiquette et une première interface selon une condition, la condition comportant le premier résultat de détermination et le deuxième résultat de détermination, comprend spécifiquement :
si le premier résultat de détermination est que le premier noeud est un noeud partagé avant de travail, attribuer, par le premier noeud, la première étiquette et la première interface, la première étiquette étant la même qu'une étiquette de réacheminement depuis le premier noeud jusqu'à un deuxième noeud voisin aval, la première interface étant la même qu'une interface de sortie depuis le premier noeud jusqu'au deuxième noeud voisin aval, et le deuxième noeud voisin aval étant un noeud voisin aval du premier noeud sur le chemin de travail ; et
si le deuxième résultat de détermination est que le premier noeud est un noeud partagé avant de protection, attribuer, par le premier noeud, la première étiquette et la première interface, la première étiquette étant la même qu'une étiquette de réacheminement depuis le premier noeud jusqu'à un troisième noeud voisin aval, la première interface étant la même qu'une interface de sortie depuis le premier noeud jusqu'au troisième noeud voisin aval, et le troisième noeud voisin aval étant un noeud voisin aval du premier noeud et sur le chemin de protection.

4. Procédé selon la revendication 1, comprenant en outre :
. recevoir, par un deuxième noeud étant le premier noeud voisin aval du premier noeud, le message de requête d'établissement du chemin de restauration du service, le message de requête d'établissement comportant au moins une deuxième étiquette étant la première étiquette, une deuxième interface étant la première interface, et des informations de route du chemin de restauration, la deuxième étiquette est une étiquette de réacheminement depuis un premier noeud voisin amont, étant le premier noeud, jusqu'au deuxième noeud, la deuxième interface est une interface de sortie depuis le premier noeud voisin amont jusqu'au deuxième noeud, et le premier noeud voisin amont est un noeud voisin amont du deuxième noeud sur le chemin de restauration (S101b) ;
. obtenir, par le deuxième noeud, selon les informations de route du chemin de restauration et des informations de route du chemin de travail du service, un ensemble de noeuds partagés inverse de travail du chemin de restauration, un noeud partagé inverse de travail dans l'ensemble de noeuds partagés inverse de travail étant un même noeud voisin amont sur le chemin de restauration et sur le chemin de travail (S102b);
. déterminer, par le deuxième noeud, si le deuxième noeud est un noeud partagé inverse de travail selon l'ensemble de noeuds partagés inverse de travail, et obtenir un troisième résultat de détermination (S103b) ;
. attribuer, par le deuxième noeud, une troisième étiquette et une troisième interface selon une condition, la condition comportant le troisième résultat de détermination, la troisième étiquette étant une étiquette de réacheminement depuis le deuxième noeud jusqu'au premier noeud voisin amont, et la troisième interface étant une interface de sortie depuis le deuxième noeud jusqu'au premier noeud voisin amont (S104b),
l'étape consistant à attribuer, par le deuxième noeud, la troisième étiquette et la troisième interface selon la condition, la condition comportant le troisième résultat de détermination, comprenant spécifiquement :
si le troisième résultat de détermination est que le deuxième noeud est un noeud partagé inverse de travail, attribuer, par le deuxième noeud, la troisième étiquette à une étiquette de réacheminement depuis le deuxième noeud jusqu'à un deuxième noeud voisin amont et la troisième interface à une interface de sortie depuis le deuxième noeud jusqu'au deuxième noeud voisin amont, et le deuxième noeud voisin amont étant un noeud voisin amont du deuxième noeud sur le chemin de travail ;
si le premier résultat de détermination est que le deuxième noeud n'est pas un noeud partagé inverse de travail, attribuer aléatoirement, par le deuxième noeud, la troisième étiquette et la troisième interface ;
. établir, par le deuxième noeud, une connexion croisée du chemin de restauration selon la deuxième étiquette, la deuxième interface, la troisième étiquette, et la troisième interface (S105b) ; et
. envoyer, par le deuxième noeud après avoir attribué la troisième étiquette et la troisième interface, un message de réponse d'établissement du chemin de restauration au premier noeud voisin amont du deuxième noeud, le message de réponse d'établissement comportant au moins la troisième étiquette, la troisième interface, les informations de route du chemin de restauration, et des informations de noeud partagé inverse de travail, et les informations de noeud partagé inverse de travail étant un ensemble de noeuds obtenu en supprimant le deuxième noeud de l'ensemble de noeuds partagés inverse de travail dans le cas où le deuxième noeud est un noeud partagé inverse de travail (S106b).

5. Procédé selon la revendication 4, dans lequel le procédé comprend en outre :
obtenir, par le deuxième noeud selon les informations de route du chemin de restauration et des informations de route d'un chemin de protection du service, un ensemble de noeuds partagés inverse de protection du chemin de restauration, un noeud partagé inverse de protection dans l'ensemble de noeuds partagés inverse de protection ayant un même noeud voisin amont sur le chemin de restauration et sur le chemin de protection ;
déterminer, par le deuxième noeud, si le deuxième noeud est un noeud partagé inverse de protection selon l'ensemble de noeuds partagés inverse de protection, et obtenir un quatrième résultat de détermination ; et
la condition comprend en outre le quatrième résultat de détermination ; et le message de réponse d'établissement comprend en outre des informations de noeud partagé inverse de protection, les informations de noeud partagé inverse de protection étant un ensemble de noeuds obtenu en supprimant le deuxième noeud de l'ensemble de noeuds partagés inverse de protection.

6. Procédé selon la revendication 5, dans lequel l'étape consistant à attribuer, par le deuxième noeud, une troisième étiquette et une troisième interface selon une condition, la condition comprenant le troisième résultat de détermination et le quatrième résultat de détermination, comprend spécifiquement :
si le troisième résultat de détermination est que le deuxième noeud est un noeud partagé inverse de travail, attribuer, par le deuxième noeud, la troisième étiquette et la troisième interface, la troisième étiquette étant la même qu'une étiquette de réacheminement depuis le deuxième noeud jusqu'à un deuxième noeud voisin amont, la troisième interface étant la même qu'une interface de sortie depuis le deuxième noeud jusqu'au deuxième noeud voisin amont, et le deuxième noeud voisin amont étant un noeud voisin amont du deuxième noeud sur le chemin de travail ; et
si le quatrième résultat de détermination est que le deuxième noeud est un noeud partagé inverse de protection, attribuer, par le deuxième noeud, la troisième étiquette et la troisième interface, la troisième étiquette étant la même qu'une étiquette de réacheminement depuis le deuxième noeud jusqu'à un troisième noeud voisin amont, la troisième interface étant la même qu'une interface de sortie depuis le deuxième noeud jusqu'au troisième noeud voisin amont, et le troisième noeud voisin amont étant un noeud voisin amont du deuxième noeud sur le chemin de protection.

7. Procédé selon la revendication 4, comprenant en outre :
. recevoir, par un troisième noeud étant le premier noeud voisin aval du deuxième noeud, un premier message de requête d'établissement du chemin de restauration du service, le premier message de requête d'établissement comportant au moins une cinquième étiquette, une cinquième interface, des informations de route du chemin de restauration, et des premières informations de noeud partagé avant de travail du chemin de restauration, la cinquième étiquette étant une étiquette de réacheminement depuis un quatrième noeud voisin amont, étant le deuxième noeud, jusqu'au troisième noeud, la cinquième interface étant une interface de sortie depuis le quatrième noeud voisin amont jusqu'au troisième noeud, le quatrième noeud voisin amont étant un noeud voisin amont du troisième noeud sur le chemin de restauration, et un noeud partagé avant de travail dans les premières informations de noeud partagé avant de travail ayant un même noeud voisin aval sur le chemin de restauration et sur le chemin de travail (S101c) ;
. déterminer, par le troisième noeud, si le troisième noeud est un noeud partagé avant de travail selon les premières informations de noeud partagé avant de travail, et obtenir un cinquième résultat de détermination (S 102c) ;
. attribuer, par le troisième noeud, une sixième étiquette et une sixième interface selon une première condition, la première condition comportant le cinquième résultat de détermination, la sixième étiquette étant une étiquette de réacheminement depuis le troisième noeud jusqu'à un quatrième noeud voisin aval du troisième noeud, la sixième interface étant une interface de sortie depuis le troisième noeud jusqu'au quatrième noeud voisin aval, et le quatrième noeud voisin aval étant un noeud voisin aval du troisième noeud sur le chemin de restauration (S103c),
l'étape consistant à attribuer, par le troisième noeud, la sixième étiquette et la sixième interface selon la première condition, la première condition comportant le cinquième résultat de détermination, comprenant spécifiquement :
si le cinquième résultat de détermination est que le troisième noeud est un noeud partagé avant de travail, attribuer, par le troisième noeud, la sixième étiquette à une étiquette de réacheminement depuis le troisième noeud jusqu'à un cinquième noeud voisin aval et la sixième interface à la même comme une interface de sortie depuis le troisième noeud jusqu'au cinquième noeud voisin aval, et le cinquième noeud voisin aval étant un noeud voisin aval du troisième noeud sur le chemin de travail ;
si le cinquième résultat de détermination est que le troisième noeud n'est pas un noeud partagé avant de travail, attribuer aléatoirement la sixième étiquette et la sixième interface ;
. envoyer, par le troisième noeud, un deuxième message de requête d'établissement du chemin de restauration au quatrième noeud voisin aval, le deuxième message de requête d'établissement comportant au moins la sixième étiquette, la sixième interface, les informations de route du chemin de restauration, et des deuxièmes informations de noeud partagé avant de travail du chemin de restauration, et les deuxièmes informations de noeud partagé avant de travail étant un ensemble de noeuds obtenu en supprimant le troisième noeud des premières informations de noeud partagé avant de travail dans le cas où le troisième noeud est un noeud partagé avant de travail (S 104c) ;
. recevoir, par le troisième noeud, un premier message de réponse d'établissement du chemin de restauration, le premier message de réponse d'établissement comportant au moins une septième étiquette, une septième interface, les informations de route du chemin de restauration, et des premières informations de noeud partagé inverse de travail du chemin de restauration, la septième étiquette étant une étiquette de réacheminement depuis le quatrième noeud voisin aval jusqu'au troisième noeud, la septième interface étant une interface de sortie depuis le quatrième noeud voisin aval jusqu'au troisième noeud, et un noeud partagé inverse de travail dans les premières informations de noeud partagé inverse de travail ayant un même noeud voisin amont sur le chemin de restauration et sur le chemin de travail (S105c) ;
. déterminer, par le troisième noeud, si le troisième noeud est un noeud partagé inverse de travail selon les premières informations de noeud partagé inverse de travail, et obtenir un sixième résultat de détermination (S106c) ;
. attribuer, par le troisième noeud, une huitième étiquette et une huitième interface selon une deuxième condition, la deuxième condition comprenant le sixième résultat de détermination, la huitième étiquette étant une étiquette de réacheminement depuis le troisième noeud jusqu'au quatrième noeud voisin amont, et la huitième interface étant une interface de sortie depuis le troisième noeud jusqu'au quatrième noeud voisin amont (S107c),
l'étape consistant à attribuer, par le troisième noeud, la huitième étiquette et la huitième interface selon la deuxième condition, la deuxième condition comportant le sixième résultat de détermination, comprenant spécifiquement :
si le sixième résultat de détermination est que le troisième noeud est un noeud partagé inverse de travail, attribuer, par le troisième noeud, la huitième étiquette à une étiquette de réacheminement depuis le troisième noeud jusqu'à un cinquième noeud voisin amont et la huitième interface à la même comme une interface de sortie depuis le troisième noeud jusqu'au cinquième noeud voisin amont, et le cinquième noeud voisin amont étant un noeud voisin amont du troisième noeud sur le chemin de travail ;
si le sixième résultat de détermination est que le troisième noeud n'est pas un noeud partagé inverse de travail, attribuer aléatoirement la huitième étiquette et la huitième interface ;
. établir, par le troisième noeud, une connexion croisée du chemin de restauration selon la cinquième étiquette, la cinquième interface, la sixième étiquette, la sixième interface, la septième étiquette, la septième interface, la huitième étiquette, et la huitième interface (S108c) ; et
. envoyer, par le troisième noeud après avoir attribué la huitième étiquette et la huitième interface, un deuxième message de réponse d'établissement du chemin de restauration au quatrième noeud voisin amont, le deuxième message de réponse d'établissement comportant au moins la huitième étiquette, la huitième interface, les informations de route du chemin de restauration, et des deuxièmes informations de noeud partagé inverse de travail, et les deuxièmes informations de noeud partagé inverse de travail étant un ensemble de noeuds obtenu en supprimant le troisième noeud des premières informations de noeud partagé inverse de travail dans le cas où le troisième noeud est un noeud partagé inverse de travail (S 109c).

8. Dispositif de noeud configuré pour exécuter l'un quelconque des procédés selon les revendications 1-4.
